(19) **Europäisches Patentamt / European Patent Office / Office européen des brevets**

(11) **EP 1 908 008 B1**

(12) **FASCICULE DE BREVET EUROPEEN**

(45) Date de publication et mention
de la délivrance du brevet:
**03.10.2012 Bulletin 2012/40**

(51) Int Cl.:
***G06T 1/00*** (2006.01)

(21) Numéro de dépôt: **06792542.0**

(22) Date de dépôt: **21.07.2006**

(86) Numéro de dépôt international:
**PCT/EP2006/064495**

(87) Numéro de publication internationale:
**WO 2007/010030 (25.01.2007 Gazette 2007/04)**

(54) **PROCÉDÉ ET DISPOSITIF DE TATOUAGE D'HORODATES, PROCÉDÉ ET DISPOSITIF DE DÉCODAGE D'HORODATES, APPLICATIONS ET PRODUITS PROGRAMMES D'ORDINATEUR CORRESPONDANTS**

VERFAHREN FÜR ZEITMARKIERUNGEN MIT WASSERZEICHEN, VERFAHREN UND VORRICHTUNG ZUR ZEITSTEMPELDECODIERUNG, VERWENDUNG UND PROGRAMMPRODUKTE FÜR DIE ENTSPRECHENDEN COMPUTER

METHOD FOR TIME-STAMPED WATERMARKING, METHOD AND DEVICE FOR TIME STAMP DECODING, USE AND PROGRAM PRODUCTS FOR CORRESPONDING COMPUTER

(84) Etats contractants désignés:
**DE FR GB**

(30) Priorité: **22.07.2005 FR 0507872**

(43) Date de publication de la demande:
**09.04.2008 Bulletin 2008/15**

(73) Titulaire: **Nextamp SA**
**35510 Cesson-Sévigné (FR)**

(72) Inventeurs:
- **BAUDRY, Séverine**
  **F-35000 Rennes (FR)**
- **NGUYEN, Philippe**
  **F-35000 Rennes (FR)**

(74) Mandataire: **Le Dantec, Claude**
**Technicolor**
**1-5 rue Jeanne d'Arc**
**92130 Issy-les-Moulineaux (FR)**

(56) Documents cités:
- **KASHYAP N ET AL: "Codes for data synchronization with timing" DATA COMPRESSION CONFERENCE, 1999. PROCEEDINGS. DCC '99 SNOWBIRD, UT, USA 29-31 MARCH 1999, LOS ALAMITOS, CA, USA, IEEE COMPUT. SOC, US, 29 mars 1999 (1999-03-29), pages 443-452, XP010329052**
- **KASHYAP N ET AL: "Codes for data synchronization and timing" INFORMATION THEORY AND COMMUNICATIONS WORKSHOP, 1999. PROCEEDINGS OF THE 1999 IEEE KRUGER NATIONAL PARK, SOUTH AFRICA 20-25 JUNE 1999, PISCATAWAY, NJ, USA,IEEE, US, 20 juin 1999 (1999-06-20), pages 63-65, XP010345502**
- **MORITA H ET AL: "ON THE CONSTRUCTION OF MAXIMAL PREFIX-SYNCHRONIZED CODES" IEEE TRANSACTIONS ON INFORMATION THEORY, IEEE SERVICE CENTER, PISCATAWAY, NJ, US, vol. 42, no. 6, novembre 1996 (1996-11), pages 2158-2166, XP000859092**
- **IROVSKI D ET AL: "Digital rights management for digital cinema" PROC. OF THE SPIE, BELLINGHAM, VA, US, vol. 4472, 31 juillet 2001 (2001-07-31), pages 105-120, XP002335263**
- **KASHYAP N ET AL: "Data synchronization with timing" IEEE TRANSACTIONS ON INFORMATION THEORY, vol. 47, no. 4, mai 2001 (2001-05), pages 1444-1460, XP002380468**
- **HABER S ET AL: "HOW TO TIME-STAMP A DIGITAL DOCUMENT", JOURNAL OF CRYPTOLOGY, vol. 3, no. 2, 1991, pages 99-111, XP002292804,**

EP 1 908 008 B1

**Description**

**1. Domaine de l'invention**

1.1 Contexte de l'invention

L'invention se place dans le domaine du tatouage numérique (« watermarking » en anglais), qui est une technique de marquage consistant à insérer un ou plusieurs messages de tatouage dans un ensemble de données support, afin de lutter contre la fraude et le piratage et d'assurer la protection des droits de propriété intellectuelle.

Plus précisément, l'invention concerne un procédé de tatouage d'au moins une horodate dans un ensemble de données support, ainsi qu'un procédé de décodage d'au moins une horodate tatouée dans un ensemble de données support.

L'invention peut être appliquée à tout type de données support (vidéo, image, audio, texte, données 3D, etc.).

Par ailleurs, l'invention s'applique quel que soit le format des données support : sous forme d'un flux (par exemple un signal vidéo capté sur un canal de télévision), sous forme de fichier, sous forme d'enregistrement (cassette, DVD...), etc.

Dans un seul souci de simplification, et pour la bonne compréhension du lecteur, on explique ci-après plus en détails le contexte de l'invention en prenant à titre d'exemple le cas d'une séquence de données de type vidéo. On rappelle que l'invention peut cependant être appliquée à tout type d'ensemble de données.

1.2 Définitions

On appelle « horodate » (aussi appelée « estampille temporelle », ou « timestamp » en anglais) une information temporelle (par exemple la date et l'heure) qui définit un instant (ou position temporelle) par rapport à une origine dans un repère temporel donné et qui est associée à une partie d'un signal (par exemple une unité de données, telle qu'une image, d'un ensemble de données). Par exemple, dans le cas où le signal est une séquence vidéo (un film), une horodate peut être associée à chaque image et correspond à la position de cette image dans la séquence.

Il est à noter que le repère utilisé pour définir le temps n'est pas nécessairement le repère de temps universel exprimé en années, mois,..., minutes secondes, par rapport à l'origine des temps habituelle dans le calendrier grégorien. On peut par exemple choisir comme origine des temps (instant t=0) l'instant correspondant à la première image d'une séquence (dans le cas d'une vidéo), ou bien à une date donnée (1$^{er}$ janvier 2000 par exemple).

De même, l'unité de mesure du temps n'est pas forcément une des unités habituelles (jour, seconde etc.) : dans le cas de la vidéo il peut être plus pertinent de définir l'unité de base comme étant la durée d'une image (1/25$^{ème}$ de seconde dans le cas du standard TV européen). Notons que l'on peut très facilement passer d'un repère temporel à un autre par une simple conversion.

On définit par ailleurs les paramètres d'horodatage suivants :

- précision de l'horodatage (à l'image, à la seconde, à la minute...) ;
- amplitude de l'horodatage (période) : longueur de la séquence (l'horodate est donc connue modulo la longueur de la séquence) ;
- granularité minimale pour la détection (ou latence de décodage) : taille minimale (nombre d'images) nécessaire à la détection pour déterminer correctement l'horodate ;
- robustesse aux erreurs : dépend de la distance entre deux portions de vidéo représentant deux instants différents ;
- débit, c'est-à-dire la taille de l'information nécessaire au codage de l'horodate par image.

1.3 Rappel des principes génériques des systèmes de tatouage

On se place, dans le cadre de la présente invention, dans le cas où le message de tatouage comprend au moins une horodate.

D'une façon générale, un système de tatouage est un système de transmission d'information qui comprend au moins un émetteur (le « tatoueur » proprement dit), qui modifie une vidéo support pour insérer le message de tatouage, et au moins un récepteur (« lecteur de tatouage »), qui à la réception d'une vidéo quelconque détermine si celle ci est tatouée et, si oui, quel est le message inséré.

L'émetteur (tatoueur) prend en entrée un ensemble de données « support » (typiquement des données vidéo) et un certain nombre de paramètres. Au nombre des paramètres figure notamment généralement le message de tatouage (aussi appelé « tatouage porteur »), qui est représenté par une suite de M éléments binaires (M≥1). Généralement, on trouve également d'autres paramètres, comme la clé qui assure un certain niveau de sécurité, la force de marquage... En fonction de ces paramètres et de la vidéo elle-même, le tatoueur modifie la vidéo pour produire une vidéo tatouée.

Le récepteur (lecteur de tatouage) prend en entrée une vidéo, ainsi qu'éventuellement un certain nombre de paramètres (par exemple une clé). Eventuellement, il prend également en entrée la vidéo originale, qui peut servir à faciliter la détermination des paramètres de canal, par comparaison entre la vidéo originale et la vidéo testée (vidéo sur laquelle on cherche à relire le tatouage). La vidéo originale peut également être utilisée pour faciliter la lecture du message de tatouage : par exemple la soustraction de l'original de la vidéo testée permet de réduire l'impact du bruit affectant le tatouage, en particulier du bruit produit par la vidéo originale elle-même. A partir de ces données il réalise généralement une étape de détection, qui détermine si la vidéo est ou non tatouée. Si la détection est positive, il réalise une étape de détermination (ou décodage) du ou des messages de tatouage (on peut avoir plusieurs messages de tatouage si les données support sont issues d'une opération de compositage, par exemple montage de plusieurs séquences vidéo, moyennage d'images, réalisation d'un montage ou d'une mosaïque à l'aide de plusieurs données support, etc.). Les messages de tatouage détectés sont éventuellement accompagnés d'informations auxiliaires : par exemple un indice de fiabilité (estimation de la probabilité que le message de tatouage estimé soit erroné), une information de localisation du tatouage (localisation temporelle et/ou spatiale, dans les cas de compositage).

Remarquons que toutes les étapes comprises dans le processus de lecture peuvent être effectuées soit directement sur les données vidéo elle-même, soit sur une représentation transformée des données (Transformée de Fourier, transformée en cosinus discret - DCT-, transformée en ondelettes etc.).

La localisation du tatouage est utile, voir indispensable. En effet, le tatouage n'a généralement d'intérêt qu'en étant qu'associé à des données supports, par exemple pour permettre d'identifier un extrait diffusé. Lorsque l'on retrouve plusieurs messages de tatouage sur un même ensemble de données support, il est donc important de savoir le plus précisément possible à quel sous-ensemble de données support chacun des messages de tatouage correspond.

## 2. Art antérieur

Lorsque l'on veut transmettre par tatouage la date et l'heure correspondant à une portion de la vidéo (portion contenant une image ou un nombre déterminé d'images), la méthode connue consiste à tatouer, sur cette portion de la vidéo, une horodate contenant la date et l'heure correspondantes. La fréquence de changement de date ainsi que la précision peuvent varier suivant les applications : par exemple, si on a besoin d'identifier le temps avec précision (par exemple si le tatouage sert à synchroniser la vidéo et l'audio), alors on mettra à jour la date contenue dans les horodates à tatouer toutes les images, et la précision de la date devra être de l'ordre de 40 ms (durée d'une image vidéo en format TV européen). Si chaque horodate sert uniquement à identifier une portion de vidéo (par exemple, à identifier automatiquement un programme télédiffusé), alors on peut se contenter d'une moindre précision en ne changeant la date contenue dans les horodates à tatouer que toutes les secondes. <page 4a>

Un inconvénient de la technique connue est que la taille du message tatoué dépend de la valeur maximale autorisée pour l'horodate, ainsi que de la précision souhaitée. Si par exemple on souhaite pouvoir identifier une portion de vidéo dans un film (par exemple sur un DVD), avec une précision à la seconde, l'horodate tatouée, avec la technique connue, sera un identifiant de la forme h:mm:ss (heures, minutes, secondes). Par contre, si on veut identifier, toujours avec une précision d'une seconde, un programme de télévision sur une période d'un an, chaque horodate tatouée devra alors être un identifiant de la forme mm::jj::hh::mm:ss (mois, jours, heures, minutes, secondes). Or, cela peut être problématique si la vidéo tatouée subit des altérations au cours de sa vie, notamment au cours de sa transmission. En effet, des modifications de la vidéo (par exemple, compression à perte de type MPEG2) constituent un bruit pour le tatouage. Plus le bruit sera important, plus il faudra introduire de redondance (par exemple sous forme de codes correcteurs d'erreur) pour garantir une transmission correcte du tatouage, et donc plus la taille maximale possible du message de tatouage sera faible. Ainsi, on ne pourra transmettre des horodates avec une précision importante et/ou une valeur maximale élevée que si le bruit introduit par la transmission est

Le document de Kashyap et al intitulé « Codes for data synchronization with timing » publié le 29 mars 1999 dans les actes de la conférence DCC '99 Snowbird décrit un procédé de codage de symboles produits par une source en une séquence de bits. Ce document enseigne l'utilisation de codes PPS qui permettent au décodeur de se resynchroniser. suffisamment faible. Pour utiliser ces techniques sans risquer de décoder une horodate erronée, il est donc indispensable de connaître à l'avance l'ordre de grandeur de la puissance de bruit sur le canal de transmission. Le dimensionnement du système est ainsi figé une fois pour toutes.

Un autre inconvénient de la technique connue est qu'elle ne permet pas toujours de détecter et corriger les horodates non cohérentes au sein d'une séquence d'horodates. En effet, avec la technique connue précitée, le tatouage de chaque horodate consiste à tatouer directement la valeur $d_k$ de cette horodate dans chacune des images. Comme expliqué ci-dessus, cette valeur est par exemple un identifiant de la forme mm::jj::hh::mm::ss définissant un instant avec une précision d'une seconde. On peut éventuellement, afin d'être plus robuste aux erreurs, encoder cette valeur $d_k$ à l'aide d'un code correcteur d'erreurs et tatouer plutôt la valeur encodée $C(d_k)$. Lors du décodage, on va récupérer une suite de valeurs bruitées $C'_k \ C'_{k+1} \ ... \ C'_{k+1}$. On doit alors décoder successivement chacune de ces valeurs bruitées : si le code correcteur suffit à corriger toutes les erreurs, on retrouve alors une suite cohérente de valeurs : $d_k, d_{k+1}...d_{k+n}$.

On peut tenter de contrôler a posteriori que les décodages sont corrects, en vérifiant que les valeurs décodées sont des horodates qui se suivent bien. Cependant, si le canal est trop bruité, il se peut qu'une ou plusieurs des valeurs décodées soient erronées : si le nombre d'erreur est faible, on peut alors les détecter en repérant les horodates non cohérentes avec le reste de la suite (les « sauts » de valeurs), puis les corriger. Par contre, si un grand nombre de valeurs décodées sont erronées, il n'est alors plus possible de les détecter et donc de les corriger.

Par ailleurs, il est rare de chercher à retrouver une horodate sur une seule image de vidéo. Généralement, on dispose plutôt d'une séquence vidéo plus ou moins longue, dont on veut connaître les horodates successives (une horodate par image par exemple). Souvent il est également intéressant de connaître en plus la portion de vidéo (aussi appelée segment tatoué) sur laquelle ces horodates sont effectivement présentes. En d'autres termes, lorsque l'on cherche à décoder les horodates le long d'une séquence vidéo, il faut dans la plupart des applications déterminer deux inconnues supplémentaires, à savoir le début et la fin du segment tatoué avec des horodates de même nature (c'est-à-dire définies dans un même repère temporel). En outre, si la vidéo est constituée d'un montage de plusieurs segments non tatoués, ou tatouées avec des horodates de natures éventuellement différentes (c'est-à-dire définies dans des repères temporels différents), il est parfois intéressant d'identifier précisément les transitions entre ces différents segments. Typiquement, dans les applications où on a affaire à une succession de segments relativement courts, remontés en alternance avec des segments non tatoués (cas des statistiques de news), il faut être capable d'identifier assez précisément le début et la fin des segments tatouées.

Malheureusement, à cause des dégradations induites par la transmission de la vidéo sur un canal bruité, l'horodate tatouée peut ne plus être lisible sur certaines images ou sur certaines parties de la séquence. Avec la méthode de l'art antérieur précitée, où on relit l'horodate tatouée sur chacune des images de la séquence, on peut ainsi décoder localement des horodates erronées, ou ne pas réussir à décoder d'horodate tatouée. Dans ce cas, il devient alors difficile d'identifier de façon correcte et précise les transitions entre segments (tatoués ou non tatoués) de la séquence. Des erreurs de décodage non filtrées peuvent ainsi être interprétées comme la présence de « micro-segments » de longueur très faible (quelques images tout au plus), ce qui est très peu probable.

### 3. Objectifs de l'invention

L'invention a notamment pour objectif de pallier ces différents inconvénients de la technique connue de l'art antérieur.

Plus précisément, l'un des objectifs de la présente invention, dans au moins un mode de réalisation, est de fournir une technique de tatouage/décodage d'horodate(s) dans un ensemble de données (par exemple une séquence vidéo), permettant la transmission d'horodates de façon beaucoup plus flexible et efficace, ainsi qu'un décodage d'horodates plus aisé et plus riche qu'avec la technique connue décrite ci-dessus.

L'invention a également pour objectif, dans au moins un mode de réalisation, de fournir une telle technique avec laquelle le débit nécessaire au codage de l'horodate n'est plus directement dicté par l'amplitude de l'horodatage et par sa précision ; ce débit peut être réduit si on accepte une latence en détection plus importante. Il s'agit par exemple, pour une même bande passante stéganographique réservée à l'horodatage, d'augmenter de la précision et l'amplitude de l'horodatage.

Un autre objectif de l'invention, dans au moins un mode de réalisation, est de fournir une telle technique grâce à laquelle il n'est plus nécessaire de connaître avec précision les caractéristiques (taux d'erreur) du canal de transmission stéganographique pour dimensionner la précision et l'amplitude de l'horodate.

Pour cela, un objectif de l'invention, dans au moins un mode de réalisation, est de proposer un codage ayant un caractère extensible (« scalable » en anglais) permettant en détection de s'adapter au taux d'erreur du canal, en introduisant une granularité en détection plus ou moins grande.

Un objectif complémentaire de l'invention, dans au moins un mode de réalisation, est de fournir une telle technique

Encore un autre objectif de l'invention, dans au moins un mode de réalisation, est de fournir une telle technique permettant, en plus des horodates, de connaître précisément les frontières des segments tatoués avec des horodates de même nature (définies dans un même repère temporel), et de minimiser les risques d'erreurs de décodage induites par le bruit de canal.

Encore un autre objectif de l'invention, dans au moins un mode de réalisation, est de fournir une telle technique permettant de prendre en compte les spécificités du bruit introduit par les codages utilisant la compensation de mouvement (de type MEPG), afin d'augmenter la fiabilité du décodage.

### 4. Exposé de l'invention

Ces différents objectifs, ainsi que d'autres qui apparaîtront par la suite, sont atteints selon l'invention à l'aide d'un procédé de tatouage d'au moins une horodate dans un ensemble de données support, ledit procédé comprenant les étapes suivantes, pour chaque horodate :

- association à ladite horodate de la valeur à un instant donné d'un signal d'horodatage de référence, qui est un signal déterministe variant au cours du temps dans un repère temporel donné et s'écrivant s(t), où t est incrémenté selon un pas d'incrémentation égal à une unité de temps prédéterminée ;
- tatouage de ladite valeur dans l'ensemble de données support.

Le principe général de l'invention consiste donc à tatouer une horodate, non pas sous la forme d'un identifiant (par exemple de la forme mm::jj::hh::mm:as, pour mois, jours, heures, minutes et secondes), mais sous la forme de la valeur à un instant donné d'un signal d'horodatage de référence (c'est-à-dire un signal d'horloge).

Comme expliqué en détail par la suite, ceci permet d'offrir beaucoup plus de possibilités au décodage que la technique de l'art antérieur, du fait qu'il est possible de paramétrer plus finement la technique de décodage qu'avec un identifiant.

Préférentiellement, le signal d'horodatage de référence prend des valeurs distinctes quand t varie de $t_d$ à $t_f$, avec $t_d$ et $t_f$ les instants de début et de fin du tatouage d'horodates. Ceci permet, au décodage, d'identifier chaque horodate de façon univoque.

Dans un premier mode de réalisation particulier de l'invention, l'ensemble de données support est une séquence d'unités de données successives, et en ce que chaque valeur du signal d'horodatage de référence est tatouée dans une unité de données distincte. Ainsi, on diminue la latence en détection.

Dans un second mode de réalisation particulier de l'invention, l'ensemble de données support est une séquence d'unités de données successives, et en ce que chaque valeur du signal d'horodatage de référence est tatouée en étant répartie dans au moins deux unités de données successives.

Par rapport au premier mode de réalisation précité, on augmente la latence en détection, mais on peut, pour une même bande passante stéganographique réservée à l'horodatage, augmenter la précision et l'amplitude de l'horodatage.

De façon avantageuse, la séquence d'unités de données successives appartient au groupe comprenant : des séquences d'unités de données de type vidéo, aussi appelées séquences vidéo et des séquences d'unités de données de type audio, aussi appelées séquences audio.

Selon une caractéristique avantageuse, une séquence de valeurs du signal d'horodatage de référence $x_1$, ..., $x_k$, $x_{k+1}$, ... est tatouée, telle qu'il existe :

- une fonction déterminée f permettant de calculer une k+1$^{ème}$ valeur en fonction de la k$^{ème}$ valeur : $\forall k \; x_{k+1} = f(x_k)$ ; et/ou
- une fonction déterminée $f_{-1}$ permettant de calculer une k$^{ème}$ valeur en fonction de la k+1$^{ème}$ valeur : $\forall k \; x_k = f^{-1}(x_{k+1})$.

Comme expliqué en détail par la suite, cette caractéristique permet en réception (décodage d'horodates), de ramener plusieurs valeurs reçues successives à plusieurs estimations d'une même valeur reçue, et d'effectuer un traitement global sur ces estimations d'une même valeur reçue (éventuellement après les avoir fusionnées).

Ainsi, on peut voir le tatouage d'horodate selon l'invention comme un codage extensible (« scalable » en anglais) dans le temps. En effet, si le signal est très bruité, on peut en réception traiter globalement plusieurs unités de données (images par exemple) consécutives avant de procéder au décodage. On a alors un code correcteur équivalent de redondance plus élevée, donc plus résistant au bruit; par contre la latence en détection sera plus élevée. La résolution (taille minimum de séquence tatouée nécessaire pour décoder un segment) varie donc automatiquement selon le rapport signal à bruit, sans besoin de modifier le codage.

Dans un mode de réalisation avantageux de l'invention, les valeurs $x_1$, ..., $x_k$, $x_{k+1}$, ... sont des mots distincts d'un code m-séquence, et en ce que les fonctions f et $f_{-1}$ sont des permutations circulaires.

Avantageusement, chacune des valeurs du signal d'horodatage de référence comprend N parties, avec $N \geq 2$, une partie de rang 1, dite partie rapide, étant incrémentée toutes les horodates et prenant des valeurs cycliques selon une période $p_1$, une partie de rang i, avec $i \in \{2...N\}$, étant incrémentée quand la partie de rang i-1 a effectué une période $p_{i-1}$ complète, et prenant des valeurs cycliques selon une période $p_i$. En outre, les étapes d'association et de tatouage sont effectuées séparément, et de façon identique ou non, pour chacune des N parties des valeurs.

Comme expliqué en détail par la suite, la séparation partie lente / autre(s) partie(s) présente l'intérêt de diminuer la complexité de décodage.

De façon avantageuse, la séquence $x_1$, ..., $x_k$, $x_{k+1}$, ... est une séquence de parties rapides de valeurs du signal d'horodatage.

L'invention concerne également un procédé de décodage d'au moins une horodate tatouée dans un ensemble de données support, ledit procédé de décodage comprenant les étapes suivantes :

- lecture, dans l'ensemble de données support, d'au moins une valeur d'un signal d'horodatage déphasé, de même forme qu'un signal d'horodatage de référence mais présentant par rapport à celui-ci un déphasage $\phi$ inconnu dans un repère temporel donné, le tatouage préalable de chaque horodate consistant en un tatouage de la valeur à un instant de tatouage donné du signal d'horodatage de référence, qui est un signal déterministe variant au cours du temps dans le repère temporel donné et s'écrivant s(t), où t est incrémenté selon un pas d'incrémentation égal à une unité de temps prédéterminée ;

- estimation du déphasage $\phi$ à partir de ladite au moins une valeur lue du signal d'horodatage déphasé et de la connaissance du signal d'horodatage de référence ;
- pour ladite au moins une valeur lue, lue à un instant donné $t_r$, détermination d'une horodate h associée en fonction dudit instant de lecture $t_r$ et du déphasage estimé $\phi$. Le principe général du décodage d'horodates selon l'invention consiste donc à estimer un déphasage, à partir d'une ou plusieurs valeurs reçues, et à déduire les horodates de ce déphasage et des instants de lecture des valeurs reçues.

Ceci suppose bien sûr que les horodates sont transmises selon le procédé de tatouage d'horodate de l'invention (c'est-à-dire sous la forme de la valeur à un instant donné d'un signal d'horodatage de référence) et non pas sous la forme d'un identifiant selon l'art antérieur (par exemple de la forme mm::jj::hh::mm::ss).

Avantageusement, la détermination de l'horodate h associée consiste à additionner ledit instant de lecture $t_r$ et le déphasage estimé $\phi$ : h = $t_r$ + $\phi$.

De façon avantageuse, la détermination de l'horodate h associée tient compte en outre d'un changement de fréquence d'échantillonnage entre le signal d'horodatage de référence et le signal d'horodatage déphasé, de sorte que ladite horodate associée h est telle que : h = $\omega . t_r$ + $\phi$, où $\omega$ est égal au rapport entre la fréquence d'échantillonnage du signal d'horodatage de référence et la fréquence d'échantillonnage du signal d'horodatage déphasé.

Préférentiellement, le signal d'horodatage déphasé prend des valeurs distinctes quand t varie de $t_d'$ à $t_f'$, avec $t_d'$ et $t_f'$ les instants de début et de fin du décodage d'horodates.

Avantageusement, l'ensemble de données support est une séquence d'unités de données successives, et en ce que, au cours de l'étape de lecture, chaque valeur, codée ou non codée, est lue dans une unité de données distincte.

Selon une variante avantageuse, l'ensemble de données support est une séquence d'unités de données successives, et, au cours de l'étape de lecture, chaque valeur, codée ou non codée, est obtenue par combinaison d'informations lues dans au moins deux unités de données.

Avantageusement, la séquence d'unités de données successives appartient au groupe comprenant :

- des séquences d'unités de données de type vidéo, aussi appelées séquences vidéo ;
- des séquences d'unités de données de type audio, aussi appelées séquences audio.

Avantageusement, l'étape de lecture comprend les étapes suivantes : réception brute d'au moins une valeur reçue ; et décodage de ladite au moins une valeur reçue, permettant d'obtenir une valeur lue du signal déphasé égale à une des valeurs du signal de référence.

Dans un premier mode de réalisation avantageux de l'invention, l'étape de réception brute permet de recevoir une séquence, dite séquence reçue, d'au moins deux valeurs reçues, et l'étape de décodage consiste en un décodage par corrélation glissante entre ladite séquence reçue et une séquence de référence.

Dans un deuxième mode de réalisation avantageux de l'invention, l'étape de réception brute permet de recevoir une séquence; dite séquence reçue, d'au moins deux valeurs reçues ; l'étape de réception brute est suivie d'une étape de traitement global de ladite séquence reçue, permettant d'obtenir une valeur résultante ; et l'étape de décodage porte sur ladite valeur résultante.

Dans un premier cas du deuxième mode de réalisation précité, la séquence reçue comprend T valeurs reçues $y_1$, ..., $y_k$, $y_{k+1}$, ...$y_T$, correspondant à T valeurs initiales $x_1$, ..., $x_k$, $x_{k+1}$, ...$x_T$ bruitées, les valeurs initiales $x_1$, ..., $x_k$, $x_{k+1}$, ...$x_T$ étant telles qu'il existe :

- une fonction déterminée f permettant de calculer une $k+1^{ème}$ valeur initiale en fonction de la $k^{ème}$ valeur initiale : $\forall_k x_{k+1} = f(x_k)$, et/ou
- une fonction déterminée $f^{-1}$ permettant de calculer une $k^{ème}$ valeur initiale en fonction de la $k+1^{ème}$ valeur initiale : $\forall k\; x_k = f^{-1}(x_{k+1})$, l'étape de traitement global comprend une étape d'obtention de T' estimations d'une valeur initiale $x_j$, avec $T' \leq T$ et $j \in \{1...T\}$, en appliquant ladite fonction f ou ladite fonction $f^{-1}$ un nombre déterminé de fois à chacune de T' valeurs reçues,

et l'étape de décodage consiste à effectuer un décodage basé sur les T' estimations de la valeur initiale $x_j$.

Avantageusement, les valeurs initiales $x_1$, ..., $x_k$, $x_{k+1}$, ...$x_T$ sont des mots distincts d'un code m-séquence, et en ce que les fonctions f et $f^{-1}$ sont des permutations circulaires.

Avantageusement, le décodage basé sur les T' estimations de la valeur initiale $x_j$ est un décodage majoritaire.

Selon une variante avantageuse, l'étape de traitement global comprend en outre une étape de fusion des T' estimations de la valeur initiale $x_j$, permettant d'obtenir une valeur fusionnée. En outre, l'étape de décodage consiste à effectuer un décodage de la valeur fusionnée.

Dans un deuxième cas du deuxième mode de réalisation précité, l'étape de traitement global comprend une étape de fusion de T' valeurs reçues, avec $T' \leq T$, permettant d'obtenir une valeur fusionnée, et l'étape de décodage consiste à effectuer un décodage de la valeur fusionnée.

Avantageusement, la valeur fusionnée est décodée avec un décodage exhaustif.

De façon avantageuse, l'étape de fusion consiste à effectuer une moyenne.

Selon une caractéristique avantageuse, l'étape de réception brute permet de recevoir une séquence, dite séquence reçue, d'au moins deux valeurs reçues. Chacune des valeurs reçues comprend N parties, avec $N \geq 2$, une partie de rang 1, dite partie rapide, étant incrémentée toutes les horodates et prenant des valeurs cycliques selon une période $p_1$, une partie de rang i, avec $i \in \{2...N\}$, étant incrémentée quand la partie de rang i-1 a effectué une période $p_{i-1}$ complète, et prenant des valeurs cycliques selon une période $p_i$. Les étapes de traitement global et de codage sont effectuées séparément, et de façon identique ou non, pour chacune des N parties des valeurs reçues.

De façon avantageuse, le procédé de décodage comprend en outre une étape de détermination des frontières de début et de fin d'au moins un segment tatoué au sein dudit ensemble de données support, chaque segment tatoué comprenant une pluralité de valeurs du signal d'horodatage déphasé qui correspondent toutes à un même déphasage, chacune des frontières de début et de fin étant déterminée par détection d'une discontinuité du déphasage estimé à partir des valeurs du signal d'horodatage déphasé, ou par une absence de détection du tatouage sur un segment suffisamment long.

Avantageusement, l'étape de détermination des frontières d'au moins un segment tatoué comprend une étape de filtrage morphologique de chaque segment tatoué par au moins une opération appartenant au groupe comprenant les opérations suivantes :

- non sélection de tout segment tatoué dont la taille est inférieure à une taille minimale prédéterminé ;
- concaténation de deux segments tatoués et d'un trou qui les sépare, si lesdits segments tatoués comprennent des valeurs du signal d'horodatage déphasé correspondant à un même déphasage et si ledit trou correspond à un intervalle de temps de durée inférieure à une durée minimale prédéterminée.

De façon avantageuse, l'étape de détermination des frontières d'un segment tatoué donné est effectuée conjointement avec l'étape de lecture des valeurs du signal d'horodatage déphasé comprises dans ledit segment tatoué donné.

Selon une variante avantageuse, l'étape de détermination des frontières d'un segment tatoué donné, d'une part, et l'étape de lecture des valeurs du signal d'horodatage déphasé comprises dans ledit segment tatoué donné, d'autre part, sont effectuées selon un mécanisme de type aller-retour, à une ou plusieurs itérations, permettant d'estimer les frontières puis les valeurs, ou inversement.

Avantageusement, le mécanisme de type aller-retour comprend :

- une phase d'amorçage, comprenant les étapes suivantes :

     * pour chacun des segments de taille supérieure à une taille minimale prédéterminée, compris dans l'ensemble de données support, on tente un traitement global et un décodage avec une étape de traitement global comprenant une étape de fusion des T' estimations de la valeur initiale $x_j$, permettant d'obtenir une valeur fusionnée ;
     * on sélectionne le segment avec le meilleur score de décodage ; puis

- une phase de poursuite, consistant à tester la présence ou non, sur une partie de l'ensemble de données support connexe audit segment sélectionné, d'une ou plusieurs valeurs du signal d'horodatage déphasé qui correspondent au même déphasage que les valeurs du signal d'horodatage déphasé comprises dans ledit segment sélectionné, de façon à déterminer de nouvelles frontières dudit segment sélectionné.

Avantageusement, l'ensemble de données support est une séquence d'unités de données successives. La phase d'amorçage comprend les étapes préalables suivantes : mesure de qualité, intrinsèque et/ou extrinsèque, de chacune des unités de données ; et sélection de certaines des unités de données, en fonction des résultats de l'étape de mesure de qualité. Chacun des segments pour lesquels on tente un traitement global et un décodage comprend uniquement des unités de données sélectionnées.

De façon avantageuse, le mécanisme de type aller-retour comprend : une phase de détermination des frontières d'un segment tatoué, en utilisant une mesure statistique de cohérence de données, ladite mesure étant intrinsèque et/ou extrinsèque ; puis une phase de décodage des valeurs du signal d'horodatage déphasé comprises dans le segment tatoué.

Avantageusement, l'étape de détermination des frontières de début et de fin d'au moins un segment tatoué comprend une étape de prise en compte d'une gigue de déphasage, comprenant les étapes suivantes, exécutées après chaque estimation d'un nouveau déphasage $\phi$ :

- calcul d'une distance entre le nouveau déphasage $\phi$ estimé et un déphasage moyen ;
- si ladite distance est supérieure ou égale à un seuil prédéterminé, une décision de discontinuité de déphasage est prise, qui indique qu'une frontière d'un segment tatoué a été atteinte ;
- si ladite distance est inférieure à un seuil prédéterminé, une décision de cohérence de déphasage est prise, qui indique qu'aucune frontière d'un segment tatoué n'a été atteinte ;
- mise à jour dudit déphasage moyen en tenant compte du nouveau déphasage $\phi$ estimé.

L'invention concerne encore une utilisation d'horodates, tatouées avec le procédé de tatouage selon l'invention et décodées avec le procédé de décodage selon l'invention, dans une application appartenant au groupe comprenant :

- utilisation d'horodates pour identifier précisément un extrait vidéo, à l'aide d'un guide de programme et/ou d'une base de données ;
- utilisation d'horodates à des fins de contrôle de qualité de réseau, par identification d'un délai de propagation ;
- utilisation d'horodates pour contrôler les heures et durées de diffusion d'une séquence d'unités de données ;
- utilisation d'horodates pour identifier un remontage d'une même séquence d'unités de données ;
- utilisation d'horodates pour fournir une horloge liée à une séquence d'unités de données.

L'invention concerne aussi un produit programme d'ordinateur téléchargeable depuis un réseau de communication et/ou enregistré sur un support lisible par ordinateur et/ou exécutable par un processeur, ledit produit programme d'ordinateur comprenant des instructions de code de programme pour l'exécution des étapes du procédé selon l'invention de tatouage d'au moins une horodate, lorsque ledit programme est exécuté sur un ordinateur.

L'invention concerne également un produit programme d'ordinateur téléchargeable depuis un réseau de communication et/ou enregistré sur un support lisible par ordinateur et/ou exécutable par un processeur, ledit produit programme d'ordinateur comprenant des instructions de code de programme pour l'exécution des étapes du procédé selon l'invention de décodage d'au moins une horodate tatouée, lorsque ledit programme est exécuté sur un ordinateur.

L'invention concerne aussi un dispositif de tatouage d'au moins une horodate dans un ensemble de données support, comprenant :

- des moyens d'association, permettant d'associer à chaque horodate la valeur à un instant donné d'un signal d'horodatage de référence, qui est un signal déterministe variant au cours du temps dans un repère temporel donné et s'écrivant s(t), où t est incrémenté selon un pas d'incrémentation égal à une unité de temps prédéterminée ;
- des moyens de tatouage de ladite valeur dans l'ensemble de données support.

L'invention concerne également un dispositif de décodage d'au moins une horodate tatouée dans un ensemble de données support, ledit dispositif comprenant :

- des moyens de lecture, permettant de lire, dans l'ensemble de données support, au moins une valeur d'un signal d'horodatage déphasé, de même forme qu'un signal d'horodatage de référence mais présentant par rapport à celui-ci un déphasage $\phi$ inconnu dans un repère temporel donné, le tatouage préalable de chaque horodate consistant en un tatouage de la valeur à un instant de tatouage donné du signal d'horodatage de référence, qui est un signal déterministe variant au cours du temps dans le repère temporel donné et s'écrivant s(t), où t est incrémenté selon un pas d'incrémentation égal à une unité de temps prédéterminée ;
- des moyens d'estimation du déphasage $\phi$ à partir de ladite au moins une valeur du signal d'horodatage déphasé et de la connaissance du signal d'horodatage de référence ;
- des moyens de détermination, pour ladite au moins une valeur lue, lue à un instant donné $t_r$, d'une horodate h associée en fonction dudit instant de lecture $t_r$ et du déphasage estimé $\phi$.

## 5. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente un organigramme d'un mode de réalisation particulier du procédé de tatouage d'horodates selon l'invention ;
- la figure 2 illustre, à travers un exemple, le principe général des procédés selon l'invention de tatouage d'horodates et de décodage d'horodates ;
- la figure 3 illustre une variante de réalisation de l'invention, dans laquelle chaque valeur du signal d'horodatage est répartie sur plusieurs images ;
- la figure 4 présente un organigramme d'un mode de réalisation particulier du procédé de décodage d'horodates selon l'invention ;
- la figure 5 illustre une structure en deux parties, lente et rapide respectivement, pour les valeurs du signal d'horodatage ;
- les figures 6 et 7 présentent chacune un mode de réalisation distinct de l'étape de lecture apparaissant sur la figure 5 ;
- la figure 8 un organigramme d'un mode de réalisation particulier d'un procédé selon l'invention permettant le décodage d'horodates et l'estimation des frontières d'un segment tatoué ;
- la figure 9 présente un mode de réalisation particulier d'un code-séquence (1023, 1023, 512) pouvant être utilisé dans un mode de réalisation particulier du procédé de tatouage d'horodates selon l'invention ;
- la figure 10 est une représentation des entiers modulo 8 comme points sur un cercle, faisant également apparaître le calcul de la moyenne de 0 et 6, qui aboutit à 7; et
- la figure 11 illustre un calcul de distance entre deux déphasages, utilisé dans un mode de réalisation du procédé de décodage d'horodates selon l'invention.

## 6. Description détaillée

L'invention concerne donc un procédé de tatouage d'horodates dans un ensemble de données support et un procédé correspondant de décodage d'horodates.

Dans la suite de la description, on suppose que l'ensemble de données support dans lequel sont tatouées les horodates est une séquence vidéo comprenant des images successives. Il est clair cependant que l'invention s'applique à tout type d'ensemble de données support.

### 6.1 Procédé de tatouage d'horodates

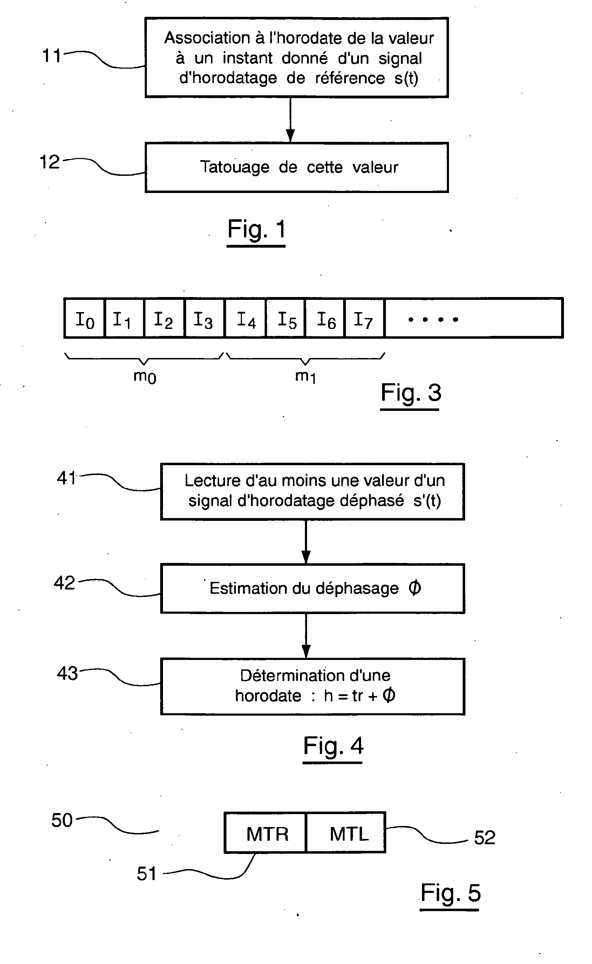

Dans le mode de réalisation présenté sur la **figure 1**, le procédé de tatouage d'horodates selon l'invention comprend les étapes suivantes, pour chaque horodate : association (11) à l'horodate de la valeur à un instant donné d'un signal d'horodatage de référence, puis tatouage (12) de cette valeur dans la séquence vidéo support.

Le signal d'horodatage de référence est un signal déterministe, variant au cours du temps dans un repère temporel donné et s'écrivant $s(t)$, où $t$ est incrémenté selon un pas d'incrémentation égal à une unité de temps prédéterminée. Par exemple, $t$ peut être incrémenté toutes les images, ou toutes les secondes, ou toutes les 10 images etc. Le signal d'horodatage de référence prend des valeurs distinctes quand $t$ varie de $t_d$ (instant de début) à $t_f$ (instant de fin).

A l'émission, on va donc tatouer $s(t)$ sur la séquence vidéo 21 (signal support), avant de la transmettre.

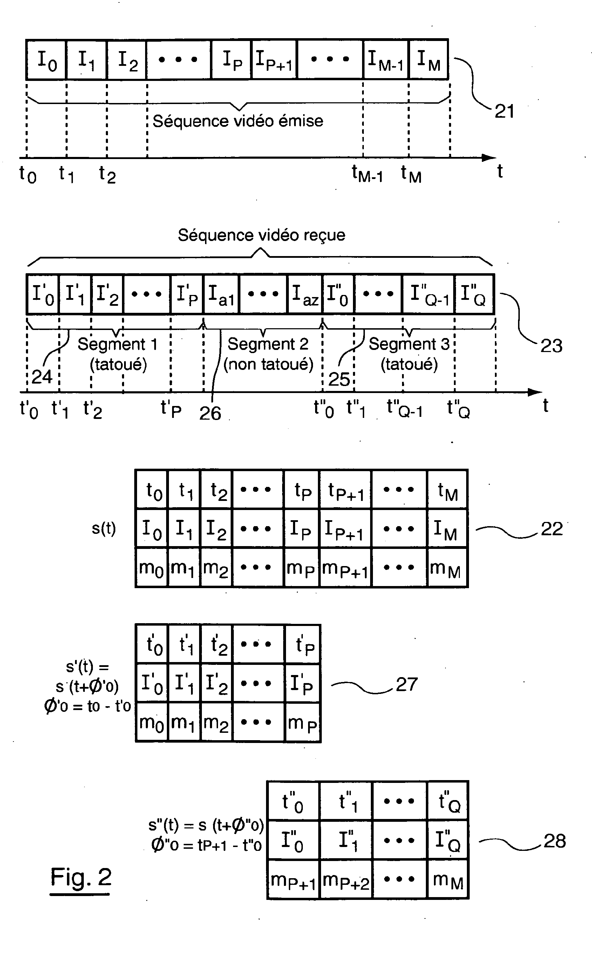

Dans l'exemple illustré sur la **figure 2**, les valeurs $m_0$, $m_1$... $m_M$ du signal d'horodatage de référence $s(t)$, aux instant $t_0$, $t_1$... $t_M$ sont tatouées dans des images distinctes $I_0$, $I_1$... $I_M$ de la séquence vidéo 21. Ceci est résumé par le tableau référencé 22 sur la figure 2.

Dans la variante de réalisation illustrée sur la **figure 3**, chaque valeur du signal d'horodatage de référence est tatouée en étant répartie dans plusieurs (quatre) images. Ainsi, les bits de la valeur $m_0$ sont répartis dans les images $I_0$ à $I_3$, les bits de la valeur $m_1$ sont répartis dans les images $I_4$ à $I_7$, etc.

On notera qu'avec la technique de l'invention, la précision d'horodatage et la granularité de détection sont deux paramètres décorrélés : on peut imaginer des schémas avec une très grande précision nécessitant un grand nombre d'images pour le décodage. Par exemple, on peut ne coder qu'un bit de la séquence par image, et relire l'horodate sur un groupe de n images successives : le débit sera alors très faible, bien que la précision reste élevée. Une implication de ceci est que l'on peut soit concentrer le codage de l'horodate dans chaque image, soit le répartir temporellement. En privilégiant la dimension spatiale, on diminue la latence en détection. En privilégiant la dimension temporelle, on augmente la latence en détection mais on peut, pour une même bande passante stéganographique réservée à l'horodatage, augmenter la précision et l'amplitude de l'horodatage.

### 6.2 Procédé de décodage d'horodates

Dans la suite de la description, et comme illustré sur la figure 2, on suppose à titre d'exemple illustratif que la séquence vidéo d'origine 21 fait l'objet d'un montage après son émission et que la séquence vidéo reçue 23 comprend deux segments tatoués 24, 25 (résultant du découpage de la séquence vidéo d'origine 21) entre lesquels est inséré un segment non tatoué 26. Ainsi, dans cet exemple illustratif :

- le premier segment tatoué reçu 24 contient des images $I_0'$, $I_1'$... $I_p'$ correspondant aux images $I_0$, $I_1$... $I_p$ de la séquence vidéo d'origine 21 et contenant donc les valeurs $m_0$, $m_1$... $m_p$ du signal d'horodatage de référence s(t). Ceci est résumé par le tableau référencé 27 sur la figure 2 ;
- le segment non tatoué reçu 26 contient des images $I_{a1}$, $I_{a2}$... $I_{az}$, ne correspondant à aucune image de la séquence vidéo d'origine 21 ; et
- le second segment tatoué reçu 25 contient des images $I_0''$, $I_1''$... $I_Q''$ correspondant aux images $I_{P+1}$, $I_{p+2}$... $I_M$ de la séquence vidéo d'origine 21 et contenant donc les valeurs $m_{P+1}$, $m_{P+2}$... $m_M$ du signal d'horodatage de référence s(t), avec P+Q-1=M. Ceci est résumé par le tableau référencé 28 sur la figure 2.

Dans le mode de réalisation présenté sur la **figure 4,** le procédé de décodage d'horodates selon l'invention comprend les étapes suivantes :

- lecture (41), dans la séquence vidéo reçue, d'au moins une valeur d'un signal d'horodatage déphasé s'(t), de même forme que le signal d'horodatage de référence s(t) mais présentant par rapport à celui-ci un déphasage $\phi$ inconnu dans un repère temporel donné : s'(t) = s(t+$\phi$) ; (voir ci-dessus la description du tatouage préalable de chaque horodate dans ce repère temporel donné, consistant en un tatouage de la valeur, à un instant de tatouage donné, du signal d'horodatage de référence) ;
- estimation (42) du déphasage $\phi$ à partir de la (au moins une) valeur lue du signal d'horodatage déphasé s'(t) et de la connaissance du signal d'horodatage de référence s(t) ;
- pour la (au moins une) valeur lue à un instant donné $t_r$, détermination (43) d'une horodate h associée en fonction de l'instant de lecture $t_r$ et du déphasage estimé $\phi$ : h = $t_r$ + $\phi$.

En résumé, à la réception, on connaît le signal d'horodatage de référence s(t) et on reçoit un signal d'horodatage déphasé s'(t) de la forme s(t+$\phi$), t variant de $t_d'$ (instant de début) à $t_f'$ (instant de fin). Le déphasage $\phi$, aussi appelé phase à l'origine, est inconnu, et on cherche à l'estimer. Une fois qu'on a obtenu une estimation jugée fiable de $\phi$, on peut alors donner l'horodate correspondant à chaque image : pour tout t entre $t_d'$ et $t_r'$, l'horodate sera égale à t+$\phi$.

Pour le premier segment tatoué reçu 24 de l'exemple précité illustré sur la figure 2, le décodage d'horodate est donc effectué comme suit. Aux instant $t_0'$, $t_1'$... $t_P'$, on lit dans les images $I_0'$, $I_1'$... $I_p'$ les valeurs $m_0$, $m_1$... $m_P$ d'un premier signal d'horodatage déphasé s'(t). A partir d'au moins une de ces valeurs, on estime le déphasage $\phi_0'$ entre le signal d'horodatage de référence s(t) et le premier signal d'horodatage déphasé s'(t) s'(t) = s(t+$\phi_0'$). On a : $\phi_0'$= $t_0$- $t_0'$. Pour tout t entre $t_0'$ et $t_P'$, l'horodate h sera égale à t+$\phi_0'$.

Pour le second segment tatoué reçu 25 de l'exemple précité illustré sur la figure 2, le décodage d'horodate est donc effectué comme suit. Aux instant $t_0''$, $t_1''$... $t_Q''$, on lit dans les images $I_0''$, $I_1''$... $I_Q''$ les valeurs $m_{P+1}$, $m_{P+2}$... $m_M$ d'un second signal d'horodatage déphasé s''(t). A partir d'au moins une de ces valeurs, on estime le déphasage $\phi_0''$ entre le signal d'horodatage de référence s(t) et le second signal d'horodatage déphasé s''(t) : s''(t) = s(t+$\phi_0''$). On a : $\phi_0''$= $t_0$-$t_0''$. Pour tout t entre $t_0''$ et $t_Q''$, l'horodate h sera égale à t+$\phi_0''$.

En pratique, le signal d'horodatage déphasé s(t+$\phi$) est très souvent entaché de bruit. On a alors uniquement à notre disposition un signal s'(t+$\phi$)=s(t+$\phi$)+e(t), e(t) étant un signal de bruit.

Dans certains cas, le signal peut également subir un changement de fréquence d'échantillonnage. Par exemple, si la séquence vidéo support (séquence vidéo d'origine) subit une conversion du format TV européen (25 images par seconde) au format TV américain (30 images par seconde), et si on choisit d'incrémenter t toutes les images (dans la vidéo résultante), le signal d'horodatage sur la vidéo résultante sera alors de la forme $s(\omega.t+\phi)$, avec $\omega$=25/30. En d'autres termes, dans ce cas, la détermination de l'horodate h tient compte en outre d'un changement de fréquence d'échantillonnage entre le signal d'horodatage de référence s(t) et le signal d'horodatage déphasé s'(t), de sorte que l'horodate h est telle que : h = $\omega.t+\phi$, où $\omega$ est égal au rapport entre la fréquence d'échantillonnage du signal d'horodatage de référence et la fréquence d'échantillonnage du signal d'horodatage déphasé.

On présente maintenant diverses façons de mettre en oeuvre l'étape de lecture (référencée 41 sur la figure 4) d'au moins une valeur du signal d'horodatage déphasé s'(t), dans la séquence vidéo reçue.

Dans une première mise en oeuvre (non illustré), l'étape de lecture 41 comprend les étapes suivantes : réception brute d'au moins une valeur reçue (réception de bits, sans traitement sur ces derniers), puis décodage indépendant de chaque valeur reçue, permettant d'obtenir une valeur lue du signal déphasé égale à une des valeurs du signal de référence. Le décodage est nécessaire car du fait que le signal reçu est bruité, la valeur reçue peut ne correspondre à aucune des valeurs possibles du signal de référence, et il convient donc de retrouver (et de prendre au final comme valeur lue) la valeur possible la plus proche de la valeur reçue.

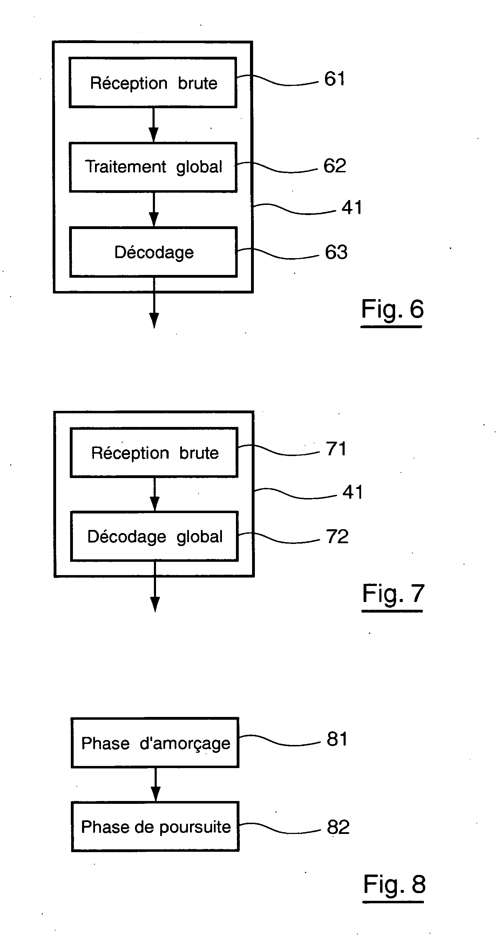

Dans une seconde mise en oeuvre illustrée sur la **figure 7**, l'étape de lecture 41 comprend les étapes suivantes : réception brute (71) d'une séquence de valeurs reçues, puis décodage global (72) de cette séquence de valeurs reçues afin d'obtenir une valeur lue du signal déphasé égale à une des valeurs du signal de référence. Ce décodage global consiste par exemple en un décodage par corrélation glissante entre la séquence de valeurs reçues et la séquence de valeurs du signal de référence. La valeur reçue maximisant l'intercorrélation est retenue comme valeur lue et est utilisée pour estimer le déphasage (qui lui-même permet de déterminer les horodates d'un même segment tatoué).

Dans une troisième mise en oeuvre illustrée sur la **figure 6**, l'étape de lecture 41 comprend les étapes suivantes : réception brute (61) d'une séquence de valeurs reçues, puis traitement global (62) de la séquence de valeurs reçues afin d'obtenir une valeur résultante, et enfin décodage (63) de cette valeur résultante afin d'obtenir une valeur lue du signal déphasé égale à une des valeurs du signal de référence.

On présente ci-après plusieurs exemples de cette troisième mise en oeuvre de l'étape de lecture 41.

Dans un premier exemple de la troisième mise en oeuvre de l'étape de lecture 41, la séquence reçue comprend T valeurs reçues $y_,, ..., y_k, y_{k+1}, ...y_T$, correspondant à T valeurs initiales $x_1, ..., x_k, x_{k+1}, ...x_T$ bruitées, les valeurs initiales $x_,, ..., X_k, x_{k+1}, ...x_T$ étant telles qu'il existe :

- une fonction déterminée f permettant de calculer une $k+1^{ème}$ valeur initiale en fonction de la $k^{ème}$ valeur initiale : $\forall k \; x_{k+1} = f(x_k)$ ; et
- une fonction $f^{-1}$ inverse de la fonction f permettant de calculer une $k^{ème}$ valeur initiale en fonction de la $k+1^{ème}$ valeur initiale : $\forall k \; x_k = f^{-1}(x_{k+1})$.

Les valeurs initiales $x_1, ..., x_k, x_{k+1}, ...x_T$ sont par exemple des mots distincts d'un code m-séquence, et dans ce cas les fonctions f et $f^{-1}$ sont des permutations circulaires (voir description détaillée ci-après du décodage de la partie rapide MTR de la valeur associée à une horodate).

Lors de l'étape de traitement global (62), on obtient T' estimations d'une valeur initiale $x_j$, avec $T' \leq T$ et $i \in \{1...T\}$, en appliquant la fonction f ou la fonction $f^{-1}$ un nombre déterminé de fois à chacune de T' valeurs reçues. L'étape de décodage consiste alors à effectuer un décodage majoritaire sur les T' estimations de la même valeur initiale $x_j$.

Un deuxième exemple (de la troisième mise en oeuvre de l'étape de lecture 41) se distingue du premier exemple ci-dessus en ce que, lors de l'étape de traitement global (62), on effectue en outre une fusion des T estimations de la valeur initiale $x_j$, permettant d'obtenir une valeur fusionnée, et en ce que l'étape de décodage (63) consiste à effectuer un décodage de la valeur fusionnée. Le décodage de la valeur fusionnée est par exemple un décodage exhaustif. L'étape de fusion consiste par exemple à effectuer une moyenne des T estimations de la valeur initiale $x_j$.

Dans un troisième exemple de la troisième mise en oeuvre de l'étape de lecture 41, la séquence reçue comprend T valeurs reçues $y_1, ..., y_k, y_{k+1}, ...y_T$, correspondant à T valeurs initiales $x_1, ..., x_k, x_{k+1}, ...x_T$ bruitées, qui sont par exemple des mots distincts d'un code quelconque (code correcteur classique (BCH, Reed-Solomon, code convolutif...) ou bien un code m-séquence tel que décrit précédemment. Lors de l'étape de traitement global (62), on fusionne T' valeurs reçues, avec $T' \leq T$, de façon à obtenir une valeur fusionnée (égale par exemple à la moyenne des T' valeurs reçues). L'étape de décodage (63) consiste alors à effectuer un décodage de la valeur fusionnée, par exemple un décodage exhaustif.

On notera que dans la troisième mise en oeuvre de l'étape de lecture 41, on peut voir le codage de l'horodatage comme un codage extensible (« scalable » en anglais) dans le temps. En effet, si le signal est très bruité, on peut traiter globalement l'information de plusieurs images consécutives avant de procéder au décodage (on se ramène à une valeur résultante et on ne décode que cette dernière). On a alors un code correcteur équivalent de redondance plus élevée, donc plus résistant au bruit. Par contre, la latence en détection sera plus élevée. La résolution (taille minimum de séquence tatouée nécessaire pour décoder un segment) varie donc automatiquement selon le rapport signal à bruit, sans besoin de modifier le codage.

### 6.3 Exemple de codage de chaque valeur en une partie lente (MTL) et une partie rapide (MTR)

On suppose dans la suite de la description qu'il y a un changement d'horodate toutes les images. On peut aisément déduire de ce cas particulier le fonctionnement de l'invention dans d'autres cas où horodate change toute les n images.

Dans le mode de réalisation particulier illustré sur la **figure 5**, chaque valeur 50 du signal d'horodatage de référence s(t) comprend deux parties :

- une partie lente (ou MTL, pour « Marque Temporelle Lente ») 52, qui change par exemple toutes les 1023 images, et
- une partie rapide (ou MTR, pour « Marque Temporelle Rapide ») 51, qui change toutes les images avec une période P (dans l'exemple donné : P=1023).

On voit que la séparation partie lente / partie rapide est dans ce cas analogue à une représentation en base 1023.

Les étapes d'association et de tatouage (référencées 11 et 12 sur la figure 1) sont effectuées séparément, et de façon identique ou non, pour chacune des parties.

Cette séparation présente l'intérêt de diminuer la complexité de décodage.

Sur la partie rapide MTR, on effectue par exemple un traitement global de type décalage et fusion (voir le deuxième exemple de la troisième mise en oeuvre de l'étape de lecture 41) suivi d'un décodage exhaustif, puisque le nombre de mots de codes possibles est relativement faible (1023).

Tandis que sur la partie lente MTL, on réalise par exemple un traitement global de type décalage (sans fusion) de $n$ images successives (voir ci-dessus le premier exemple de la troisième mise en oeuvre de l'étape de lecture 41) préalablement à un décodage majoritaire, puisque la probabilité d'avoir un changement de partie lente parmi les images décalées est assez faible ($n$/1023).

De façon générale, on peut avoir une décomposition en $N$ parties. La partie de rang 1, dite partie rapide, est incrémentée toutes les horodates et prend des valeurs cycliques selon une période $p_1$. Toute partie de rang i, avec i $\in$ {2...N}, est incrémentée quand la partie de rang i-1 a effectué une période $p_{i-1}$ complète, et prend des valeurs cycliques selon une période $p_i$.

### 6.3.1 Codage de la partie rapide de l'horodate (MTR)

Comme déjà évoqué ci-dessus, afin de rendre le décodage d'horodates plus rapide, on génère une séquence de valeurs reçues $y_1$, ..., $y_k$, ... correspondant à une séquence de valeurs initiales $x_1$, ..., xk, ... bruitées, les valeurs initiales $x_1$, ..., $x_k$, ... étant telles qu'une k+1$^{ème}$ valeur initiale peut être calculée en fonction de la k$^{ème}$ valeur initiale :

$\forall$k $x_{k+1} = f(x_k)$

Généralement $x_i$ peut être soit un scalaire (un nombre), soit un vecteur (une suite de nombres).

Ainsi, lorsqu'on reçoit une suite d'éléments $y_k, y_{k+1}, ..., y_{k+i}$, (valeurs reçues) correspondant à la séquence d'éléments $x_k, x_{k+1}, ..., x_{k+i}$ bruités (valeurs initiales), on peut se ramener à plusieurs estimations d'une même valeur initiale $x_{k+i}$ en appliquant la fonction $f$ un certain nombre de fois à chacun des éléments reçus.

Cette propriété est intéressante lorsque la fonction $f$ est linéaire, et que les données sont bruitées : si on observe la séquence bruitée $y_k, y_{k+1}, ..., y_{k+i}$ avec $y_j = x_j + e_j$, $e_j$ étant le bruit, alors on aura une suite d'estimations de l'élément $x_j$ donnée par :

$$\hat{y}_{k+i}^0 = y'_{k+i} = x_{k+i} + e_{k+i}$$
$$\hat{y}_{k+i}^1 = f(y'_{k+i-1}) = f(x_{k+i-1}) + f(e_{k+i-1})$$
$$\hat{y}_{k+i}^2 = f \circ f(y'_{k+i-2}) = f \circ f(x_{k+i-2}) + f \circ f(e_{k+i-2})$$
$$= \cdots$$
$$\hat{y}_{k+i}^i = \underbrace{f \circ f \circ \cdots \circ f}_{i \text{ fois}}(y'_k) = \underbrace{f \circ f \circ \cdots \circ f}_{i \text{ fois}}(x_k) + \underbrace{f \circ f \circ \cdots \circ f}_{i \text{ fois}}(e_k)$$

Si la fonction $f$ n'augmente pas le poids du vecteur d'erreur (par exemple si $f$ est une permutation), alors on peut considérer uniquement les éléments $\hat{y}_j$ pour le décodage sans perdre d'information. On pourra par exemple effectuer un décodage majoritaire : les performances seront équivalentes à celles qu'on aurait obtenues avec une répétition de $i+1$. D'autre part, si le calcul de la fonction $f$ n'est pas trop coûteux, la complexité de décodage sera beaucoup plus faible qu'avec un décodage par corrélation tel que décrit plus haut.

De façon plus générale, si le niveau de bruit varie selon les instants de réception (par exemple si la probabilité d'erreur varie au cours du temps), et si de plus on sait estimer ce niveau de bruit (par des techniques décrites en 6.5.2 notamment), on peut alors sélectionner les éléments (valeurs reçues) correspondant au niveau de bruit le plus faible et n'effectuer la fusion que sur ces éléments là.

Définissons la fonction f$^{-1}$ comme la fonction inverse de f, telle que :

$$\text{Pour tout élément x } f \circ f^{-1}(x) = f^{-1} \circ f(x) = x$$

On peut alors obtenir une estimation de n'importe quel élément $x_j$ (valeur initiale) à partir de n'importe quel élément bruité $y_k$ en appliquant (j-k) fois f à $y_k$ si k<j, et (j-k) fois f$^{-1}$ à $y_k$ si k>j.

Une famille de codes intéressante compte tenu des propriétés recherchées décrites précédemment est la famille des codes m-séquence. Ces codes sont bien connus de l'homme de l'art ; ils sont par exemple décrits dans « Digital Communications » , John Proakis, 3eme édition, McGraw-Hill International Editions, p 433-435, sous le nom anglais de « Maximum Length shift-register codes ». Notons également que, par rapport aux codes décrits dans cet ouvrage, nous n'incluons pas le mot constitué uniquement de zéros dans notre ensemble de mots de codes.

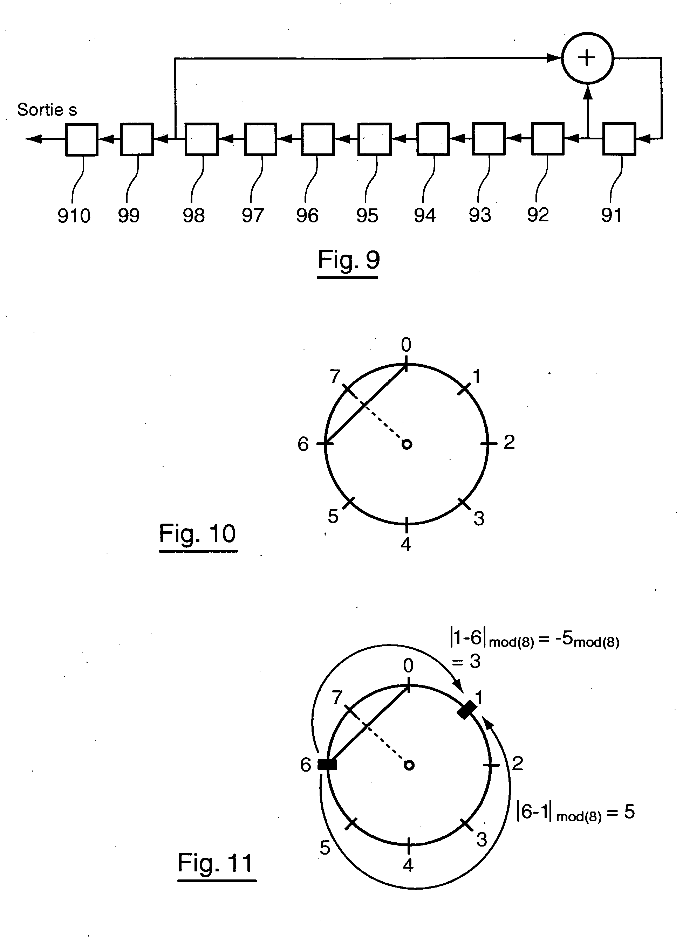

Prenons l'exemple du code m-séquence (1023,1023,512). Ce code est obtenu de la manière suivante : on considère la m-séquence pour m=10, générée par les registres à décalages de connexions (1,8) (voir **figure 9**). Les registres à décalage 9\_1 à 9\_10 sont initialisés avec toutes les valeurs de registre à 0, sauf le premier registre(référencé 9\_1) à 1. A chaque coup d'horloge, les valeurs dans les registres sont décalées de 1 (la valeur du registre $k$ passe dans le registre $k+1$); la valeur du dernier registre (référencé 9\_10) constitue la valeur de sortie ; et le premier registre 9\_1 est alimenté avec la somme (modulo 2) des premier et huitième registres (référencés 9\_1 et 9\_8 respectivement) 8 (valeurs prises avant le décalage).

On peut montrer que l'ensemble des valeurs de sortie $s_k$ forme une séquence périodique de longueur L=2$^m$-1 (ici $m$=10, donc $L$=1023). On considère un code formé par l'ensemble des mots $\{c_i\}$ de longueur $L$ générés de la façon suivante :

$$c_i(j) = s_{i+j)\,\mathrm{mod}[L]}$$

C'est à dire que le code est constitué de toutes les permutations circulaires de la séquence de sortie. On peut montrer que la distance minimale entre deux mots quelconques du code est 2$^{m-1}$ (512 dans notre cas).

On code donc la partie rapide MTR d'une ième valeur du signal d'horodatage de référence par la ième séquence permutée (ième mot du code) : $c_i$. Le code comprend donc un ensemble de 1023 mots (donc permet de coder des messages de longueur un peu inférieure à 10 bits) codés sur une longueur de 1023 (donc redondance un peu supérieure à 102). Ce code très redondant permet donc d'obtenir une bonne résistance au bruit. La structure cyclique du code m-séquence permet également de faciliter la fusion préalablement au décodage : en effet, on sait que les mots bruités d'images successives $r'_i, r'_{i+1}, \dots r'_{i+k}$ correspondent aux décalages circulaires successifs d'un même mot inconnu, $c_j$. On peut donc, par une suite de décalages circulaires, se ramener à un même mot de code :

$$\hat{c}_i^0 = r'_i$$
$$\hat{c}_i^1 = r'_{i+1}{}^{(-1)}$$
$$\dots$$
$$\hat{c}_i^k = r'_{i+k}{}^{(-k)}$$

avec la notation $x^{(i)}$ dénotant la permutation circulaire de i positions vers la droite du mot x.

Notons qu'ici la permutation circulaire d'une position vers la droite correspond à la fonction f$^{-1}$ décrite dans le cas général au paragraphe 6.3.1 ci-dessus. La fonction f correspond elle au décalage circulaire d'une position vers la gauche.

Les mots $r'_j$ obtenus correspondent donc à différentes versions bruitées d'un même mot. On peut donc les moyenner, afin de réduire l'incidence du bruit et améliorer le décodage. La fusion de $n$ mots est donc équivalente à une répétition de $n$ fois le mot.

Une des manières possible de réaliser le décodage consiste à effectuer la corrélation avec l'ensemble des mots du code (décodage exhaustif). On considère le mot le plus probable comme celui qui présente le meilleur score de corrélation avec le mot reçu. On évalue la probabilité d'erreur que l'on fait en sélectionnant ce mot, en comparant le score de corrélation à un seuil prédéterminé. Ce seuil dépend de la probabilité d'erreur considérée comme acceptable pour le système.

### 6.3.2 Codage de la partie lente (MTL)

On peut utiliser n'importe quel type de code pour transmettre la partie lente MTL de chaque valeur du signal d'horodatage de référence (on n'a pas de contrainte sur la complexité de calcul de successeur comme pour la partie rapide), par exemple un code correcteur classique (BCH, Reed-Solomon, code convolutif...) ou bien un code m-séquence tel que décrit précédemment.

### 6.4 Notion de segment

Nous avons vu ci-dessus qu'avec la technique de l'invention, lorsque l'on cherche à décoder les horodates le long d'une séquence vidéo reçue, on recherche en fait à retrouver une seule information, le déphase entre le signal d'horodatage déphasé et le signal d'horodatage de référence. En fait, il faut dans la plupart des applications, déterminer deux inconnues supplémentaires, à savoir le début et la fin d'un segment tatoué avec des horodates successives, c'est-à-dire un segment de séquence vidéo comprenant des valeurs présentant toutes un même déphasage (décalage temporel) par rapport aux valeurs identiques du signal d'horodatage de référence.

Typiquement, dans les applications où on a affaire à une succession de segments (morceaux de séquences vidéo) relativement courts, remontés en alternance avec des segments non tatouées (cas des statistiques de news ), il faut être capable d'identifier assez précisément le début et la fin des segments tatouées. Lors d'un « collage » de deux segments pris à des instants différents, on aura donc une discontinuité de déphasage à la transition entre les deux segments, qu'il faut identifier et localiser le plus précisément possible (voir ci-dessus la description de la figure 2).

On peut rendre le décodage selon l'invention plus performant en exploitant le modèle de tatouage de segment. On peut utiliser les propriétés morphologiques des segments pour limiter le nombre de fausses alarmes et d'erreur et augmenter le taux de détection, en injectant des informations *a priori* sur la taille minimale des segments et des trous. On peut ainsi supposer qu'un segment tatoué reçu (avec le même déphasage) a une longueur minimale $Lmin$ de l'ordre de la seconde : on peut ainsi supprimer les segments de taille inférieure, qui correspondent très probablement à des fausses alarmes ou à des erreurs. De même, lorsqu'on observe un « trou » de détection entre deux segments tatoués avec le même déphasage, il est très probable que l'on ait affaire à un segment continûment tatoué. Si ce trou est de taille raisonnable (de l'ordre de quelques secondes), on peut donc le « combler ».

On peut également exploiter l'aspect segment lors du décodage en lui même, en utilisant la scalabilité intrinsèque conférée au codage. En se basant sur le fait que la taille des segments tatoués est supérieure à une taille minimale $Lmin$ (voir plus haut), on sait que l'on peut fusionner (avec ou sans décalage préalable, selon la partie des valeurs reçues qui est traitée) au moins $Lmin$ images avant de tenter un décodage « classique ». La difficulté réside dans le fait que l'on ne connaît pas la position des frontières de segment, et donc que l'on ne sait pas *a priori* quelles images peuvent être fusionnées ensemble : il faut donc réaliser le décodage (estimation de la valeur du tatouage) conjointement à l'estimation de frontières de segment.

En pratique une véritable estimation conjointe est difficile et complexe à réaliser. On préfère un mécanisme « aller-retour », où on estime la valeur, puis les frontières (ou les frontières, puis la valeur), quitte à raffiner et à réitérer le processus si les résultats obtenus ne sont pas probants.

Par exemple, si on a réussi à décoder le tatouage sur une portion de vidéo (donc la portion est comprise dans le segment réellement tatoué), alors on utilise un mécanisme de poursuite pour déterminer les frontières du segment (poursuite avant et arrière).

A l'inverse, on peut d'abord estimer si une portion de vidéo appartient à un même segment tatoué (détermination des frontières) avant d'effectuer le décodage, en utilisant une mesure statistique de cohérence des données. Cette mesure peut être intrinsèque (fondée sur les données horodate uniquement) ou extrinsèque (par exemple, utilisation d'une estimation de taux d'erreur réalisée lors du décodage d'une autre partie du tatouage).

Remarquons que ces principes de décodage sont généraux et ne sont pas uniquement applicables au cas particulier de la méthode présentée ici de codage de l'horodate par transmission d'un signal d'horodatage, et recherche du déphasage de ce signal au décodage. On peut également utiliser les propriétés morphologiques des segments avec tout mécanisme de transmission de la date et de l'heure, par exemple avec le procédé décrit dans l'état de l'art. On peut par exemple chercher à décoder la date et l'heure individuellement sur chaque image ou chaque groupe d'image de la séquence, puis utiliser les informations *a priori* sur les tailles des trous et des segments afin de consolider les décodages obtenus. De même, on peut également utiliser sur ces procédés des mécanismes de poursuite, en effectuant, à partir de la date et l'heure préalablement décodés sur une portion de la vidéo, une prédiction de la date et de l'heure sur une partie connexe de cette portion, et en cherchant à vérifier ou infirmer cette prédiction sur la partie connexe. Ce mécanisme de poursuite permettra ainsi de déterminer avec plus de précision et de fiabilité les frontières du segment tatoué.

### 6.5 Décodage de la partie rapide (MTR) et estimation des frontières de segment

On a évoqué plus haut un principe simple de décodage de la partie rapide MTR par fusion, qui est adapté lorsque horodate est continue (pas de changement), et que les caractéristiques du canal de transmission sont à peu près constantes (pas de variation temporelle du taux d'erreur notamment). On va ici développer un mécanisme plus complet et plus robuste, adapté aux cas pratiques où l'on ne connaît pas à l'avance les frontières de segment, et où on doit les estimer conjointement au décodage de la valeur de la partie rapide MTR.

Comme illustré sur la **figure 8**, l'algorithme peut se décomposer en deux phases :

- une phase d'amorçage 81, où on n'a aucune information a priori sur la valeur du tatouage ni sur la localisation des segments. On cherche donc à décoder une horodate sans aucun *a priori* ni sur la localisation ni sur la valeur de celle-ci ;
- une phase de poursuite 82, où on connaît la valeur de horodate sur une portion de la séquence, et on teste la présence ou non d'une horodate cohérente (c'est à dire de déphasage identique) sur des images proches de la portion décodée. Cette phase permet de déterminer les frontières de segments de même déphasage.

Comme expliqué ci-après, dans chacune des phases, l'algorithme a été conçu de façon à s'adapter aux variations de taux d'erreur du canal, ainsi qu'à un phénomène de gigue dû au codage MPEG.

### 6.5.1 Modélisation du canal de transmission

Cette modélisation permet de comprendre les fondements des algorithmes proposés, ainsi que les raisons de leur efficacité.

Après une compression MPEG, le signal de tatouage est entaché de deux types de bruit :

- bruit tonal : dû principalement à la quantification des coefficients DCT. Le signal de tatouage est affecté par un bruit que l'on peut considérer comme indépendant du signal lui même ;
- gigue d'horodate causée par l'entraînement MPEG. La prédiction de mouvement (codage d'images P ou B par prédiction à partir d'images I ou P) fait que le tatouage porté par une image de référence (I ou P) peut être « recopié » sur une image prédite (P ou B). Dans une telle image, le signal reçu sera donc un « mélange », en proportions variables, du « vrai » signal de tatouage de l'image courante et des tatouages des images utilisées pour réaliser la prédiction de mouvement. Il n'est pas rare que le niveau du tatouage de l'image de référence soit, dans l'image prédite, plus fort que le « vrai » tatouage (qui peut être complètement lessivé).

On a donc un signal de tatouage bruité de la forme :

$$y(t) = b(t) + \sum_{i=-\tau_2}^{i-\tau_1} \alpha(t+i)x(t+i)$$

$b(t)$ est le bruit tonal à l'instant $t$, d'énergie variable dans le temps
$y(t)$ est le signal de tatouage reçu à l'instant $t$
$x(i)$ est le signal de tatouage émis à l'instant $i$.
$\alpha_t(t+i)$ est un coefficient pondérateur du signal de tatouage t+i. Il varie dans le temps, puisque le type de prédiction MPEG varie. Si l'image $t$ est codée Intra, alors seul ($\alpha_t(t)$ sera non nul. Par contre, si l'image $t$ est codée Bidirectionnelle, alors il est probable que l'on aura un certains nombre de coefficients $\alpha_t(t+i)$ non nuls.
$\tau_1$ et $\tau_2$ sont les bornes de prédiction. Elles sont distantes d'une longueur de GOP (pour « Group Of Picture » selon la terminologie MPEG) ou moins.

### 6.5.2 Phase d'amorçage

Dans la phase d'amorçage (81), on n'a aucune information *a priori* sur la valeur du tatouage, ni sur sa position (on ne sait même pas si la portion de vidéo est tatouée : c'est une phase de détection).

On utilise deux propriétés pour faciliter la détection :

- on sait *a priori* que, si une image est tatouée, les images voisines le seront aussi (taille minimale de segment) ;
- on utilise une mesure de qualité, intrinsèque ou extrinsèque, de chacune des images afin de diminuer la complexité de décodage.

La première propriété permet d'augmenter le taux de détection en fusionnant plusieurs images avant de réaliser le décodage. Un algorithme d'amorçage « complet » est le suivant :

- on considère une séquence de taille $N$
- pour tous les segments de taille supérieure à *Lmin*, compris dans la séquence (on a de l'ordre de $N^2/2 - L_{min}N$ telles séquences), on tente un décodage après fusion ;
- si le décodage aboutit sur au moins un des segments, on considère que la phase d'amorçage a réussi. On garde comme hypothèse celle du segment avec le meilleur score de décodage.

L'inconvénient de cet algorithme est une très grande complexité, d'autant plus que N est grand (en pratique N peut croître très rapidement lorsque l'on reste en phase d'amorçage pendant longtemps, c'est-à-dire lorsque la vidéo n'est pas tatouée).

Dans une variante de réalisation permettant de diminuer la complexité, on limite le nombre d'échantillons (valeurs reçues) fusionnés, ainsi que la fenêtre temporelle utilisée (plus petit segment de vidéo contenant tous les échantillons fusionnés, ceux-ci n'étant pas nécessairement consécutifs). Afin de sélectionner les échantillons pour lesquels le décodage a le plus de change d'aboutir, on évalue préalablement la « qualité » de chaque échantillon, soit par une mesure de qualité extrinsèque, soit par une mesure de qualité intrinsèque.

Mesure de qualité extrinsèque : lorsque l'on tatoue un identifiant en même temps que l'horodate, et que l'on réalise le décodage de celui-ci au préalable, on peut utiliser les résultats de décodage de l'identifiant pour mesurer le rapport signal à bruit. Si l'identifiant consiste en un motif fixe on peut utiliser le score de corrélation. Si l'identifiant est codé sur n bits, et qu'un décodage exhaustif est impossible, deux cas sont possibles : soit le décodage échoue (et dans ce cas là on ne tente pas le décodage de l'horodate, ou bien on attribue la note de qualité minimale à l'image), soit le décodage réussit et on attribue comme note le score de corrélation avec le mot décodé).

Mesure de qualité intrinsèque : on se base ici sur les données d'horodate elles-mêmes (données de la valeur reçue) pour estimer la qualité de la transmission. Cela est notamment possible lorsque l'on peut réaliser, avec une complexité faible, un décodage exhaustif. On obtient alors le mot le plus probable, ainsi que la qualité associée (score de corrélation par exemple). Ce score peut être utilisé pour sélectionner les meilleures images, préalablement à la fusion. Cependant, d'autres mesures de la qualité sont possibles même lorsque le décodage n'est pas exhaustif (par exemple, distance au mot décodé si le décodage réussit, dans le cas d'un décodage incomplet).

Une fois que l'on a déterminé un ensemble des échantillons de meilleure qualité, on peut effectuer la fusion telle que décrite par exemple en 6.3.1

### 6.5.3 Phase de poursuite

Dans la phase de poursuite 82, on a déjà décodé sur un intervalle $[t_1;t_2]$ des valeurs de partie rapide MTR présentant un même déphasage m. On cherche à « étendre » l'intervalle, c'est à dire à tester la présence en t1-1 et $t_2$+1 de valeurs ayant le même déphasage m. Par rapport au décodage de la phase d'amorçage, c'est donc une étape de moindre complexité, puisque l'on ne teste que deux hypothèses (« *m présent* » ou « *m absent* »).

La poursuite peut gérer les variations du taux d'erreur du canal (typiquement rapport signal à bruit plus faible sur les images prédites par rapport aux images Intra) de différentes manières : mécanisme à hystérésis (seuil de corrélation plus bas dans la phase de poursuite que dans la phase d'amorçage); mécanisme temporel (en même temps qu'un seuil de corrélation, on fixe un nombre seuil d'images consécutives non détectées)...

Un tel algorithme pour le mécanisme temporel peut être décrit de la façon suivante:

- paramètres :

T_MAX : nombre d'images consécutives non détectées tolérées

Seuil : seuil de corrélation pour la détection

- algorithme :

Initialisation de la phase de poursuite (on vient de la phase d'amorçage) nb_ndet = 0 (nombre d'images non détectées)
m : déphasage de la MTR test
t = t2+1 (première image non décodée)
régime permanent :

```
tant que nb_ndet <= T_MAX
corrélation entre les données de l'image t et m
si score de corrélation supérieur à Seuil //détection ok nb_ndet=0
sinon
nb_ndet ++
si nb_ndet >T_MAX // on a perdu le signal passage en phase d'amorçage
t++
```

**6.5.4 Prise en compte de la gigue de phase due au codage MPEG**

On a vu dans le modèle de canal que la compression MPEG entraînait une gigue d'horodate, que l'on peut aussi appeler « gigue de déphasage » dans le contexte de la présente invention. En effet, la valeur instantanée du déphasage (entre le signal d'horodatage déphasé et le signal d'horodatage de référence) fluctue autour d'une valeur moyenne, en fonction du type de compensation de mouvement de chaque image.

Dans la phase de poursuite, on peut améliorer la détection de la partie rapide MTR en prenant en compte les fluctuations possibles du déphasage autour de sa valeur moyenne. Pour ce faire, il faut au préalable définir ce qu'est la moyenne d'un ensemble de déphasages, ce qui n'est pas trivial puisque les déphasages sont à valeur dans un groupe fini (l'ensemble des entiers modulo 1023 dans l'exemple cité ci-dessus). Par exemple, si on considère les valeurs 0 et 1022, qui sont « proches » dans le groupe des entiers modulo 1023, 511 n'est clairement pas une moyenne pertinente. On ne peut donc pas ramener le calcul de la moyenne à une somme modulo 1023, suivie d'une division et d'un arrondi.

Une représentation plus adéquate consiste à interpréter un entier modulo $n$ comme une phase (un angle) d'un point sur un cercle (l'ensemble des points autorisés étant discret et régulièrement réparti sur le cercle). Un entier $k$ modulo $n$ peut donc être représenté sous sa forme complexe : $e^{2\pi ik/n}$, $i$ étant la racine complexe de -1.

On peut alors représenter la moyenne m de plusieurs valeurs $\{k_1;...k_l\}$ modulo $n$ comme la phase de la moyenne (complexe) M des points correspondants :

$$M = \sum_{j=1}^{l} e^{\frac{2\pi ik_j}{n}}$$

$$M = \rho e^{2\pi i\phi}$$

$$m = E(n\phi)$$

$$\phi \in [0,1[$$

E(.) étant la fonction arrondi

A titre d'exemple, la **figure 10** est une représentation des entiers modulo 8 comme points sur un cercle. Cette figure fait également apparaître le calcul de la moyenne de 0 et 6, qui aboutit à 7.

L'algorithme de poursuite tenant compte de la gigue de déphasage peut donc être résumé en trois étapes :

- calcul pour l'image t du déphasage le plus probable $\phi_t$ ;
- calcul de la distance entre et le déphasage moyen pour déterminer si on a rupture de cohérence ou pas ;
- mise à jour du déphasage moyen $\phi_m$ en tenant compte du nouveau déphasage $\phi_t$.

La première étape peut consister, par exemple, en un test de 2T+1 hypothèses, T étant l'amplitude maximale de la gigue (typiquement, T est la taille de GOP MPEG). Les hypothèses à tester sont alors l'ensemble des phases $[\phi_m-T ; \phi_m+T]$. On choisira comme déphasage le plus probable $\phi_t$ l'hypothèse retenue (maximisant la corrélation par exemple).

La distance entre déphasages doit également être calculée avec précaution, en tenant compte de la nature « circulaire » des données traitées. La fonction pertinente est :

$$d_{\mathrm{mod}(n)}(k_1;k_2) = MIN((k_1 - k_2)_{\mathrm{mod}(n)};(k_2 - k_1)_{\mathrm{mod}(n)})$$

Elle correspond à la longueur du plus petit chemin sur le cercle pour passer d'un point à l'autre (parcours dans le sens horaire ou dans le sens inverse).

La **figure 11** illustre un calcul de distance entre deux déphasages pour les valeurs 1 et 6, dans la même représentation des entiers modulo 8 que celle de la figure 10. Le résultat est : $d_{\mathrm{mod}(8)}(1;6) = MIN(3;5) = 3$

### 6.6 Applications de l'invention

Les horodates tatouées peuvent être utilisées conjointement à une base de données (grille de programmes), afin d'identifier un extrait de vidéo. La base de données contient une liste [date début; date fin; titre et caractéristiques du programme]. Lors de la réception d'un extrait vidéo et du décodage des horodates correspondantes, on peut ainsi identifier le programme.

Le tatouage d'horodates peut également être utilisé à des fins de contrôle de réseau. On peut par exemple identifier un délai de propagation le long d'une chaîne TV.

Les horodates peuvent également être utilisées pour identifier les codages le long de la chaîne (dans le cas d'un codage MPEG : longueur et structure de GOP).

On peut se servir des horodates pour repérer et localiser les remontages dans une séquence, en identifiant les discontinuités du signal d'horodatage reçu. Ceci est notamment intéressant pour détecter les coupures de pub lors de la reprise d'un programme.

On peut également utiliser les horodates pour contrôler qu'une publicité a bien été transmise dans son intégralité, et n'a pas été coupée.

Notons que les applications décrites ici peuvent être réalisées quelle que soit la méthode utilisée pour transmettre les horodates, et pas seulement avec le procédé selon l'invention de codage d'horodates par tatouage des valeurs d'un signal d'horodatage (signal d'horloge) connu dont on recherche le déphasage en réception.

### Revendications

1.  Procédé de détermination d'au moins une horodate à partir d'un ensemble de données support après transmission dudit ensemble de données support, **caractérisé en ce qu'**il comprend les étapes suivantes :

    - lecture (41), dans l'ensemble de données support, d'au moins une valeur d'un signal d'horodatage décalé temporellement, dit signal d'horodatage déphasé, lors de ladite transmission, de même forme qu'un signal d'horodatage de référence mais présentant par rapport à celui-ci un décalage temporel, appelé déphasage, $\phi$ inconnu dans un repère temporel donné, le tatouage préalable de chaque horodate consistant en un tatouage de la valeur à un instant de tatouage donné du signal d'horodatage de référence, qui est un signal déterministe variant au cours du temps dans le repère temporel donné et s'écrivant s(t), avec s(t) différent de t, où t est incrémenté selon un pas d'incrémentation égal à une unité de temps prédéterminée ;
    - estimation (42) du déphasage $\phi$ à partir de ladite au moins une valeur lue du signal d'horodatage déphasé et de la connaissance du signal d'horodatage de référence ;
    - pour ladite au moins une valeur lue, lue à un instant donné $t_r$, détermination (43) d'une horodate h associée en fonction dudit instant de lecture $t_r$ et du déphasage estimé $\phi$ ;

    chacune des valeurs du signal d'horodatage de référence comprenant N parties (51, 52), avec $N \geq 2$, une partie de rang 1, dite partie rapide (51), étant incrémentée toutes les horodates et prenant des valeurs cycliques selon une période $p_1$, une partie de rang i, avec $i \in \{2...N\}$, étant incrémentée quand la partie de rang i-1 a effectué une période $p_{i-1}$ complète, et prenant des valeurs cycliques selon une période $p_i$.

2.  Procédé selon la revendication 1, **caractérisé en ce que** la détermination de l'horodate h associée consiste à additionner ledit instant de lecture $t_r$ et le déphasage estimé $\phi$ : $h = t_r + \phi$.

3.  Procédé selon l'une quelconque des revendications 1 et 2, **caractérisé en ce que** la détermination de l'horodate h associée tient compte en outre d'un changement de fréquence d'échantillonnage entre le signal d'horodatage de référence et le signal d'horodatage déphasé, de sorte que ladite horodate associée h est telle que : $h = \omega.t_r + \phi$, où $\omega$ est égal au rapport entre la fréquence d'échantillonnage du signal d'horodatage de référence et la fréquence d'échantillonnage du signal d'horodatage déphasé

4.  Procédé selon l'une quelconque des revendications 1 à 3, **caractérisé en ce que** le signal d'horodatage déphasé prend des valeurs distinctes quand t varie de $t_d'$ à $t_f'$, avec $t_d'$ et $t_f'$ les instants de début et de fin du décodage d'horodates.

5.  Procédé selon l'une quelconque des revendications 1 à 3, **caractérisé en ce que** l'ensemble de données support est une séquence d'images successives, et **en ce que**, au cours de l'étape de lecture, chaque valeur, codée ou non codée, est lue dans une image distincte.

6. Procédé selon l'une quelconque des revendications 1 à 3, **caractérisé en ce que** l'ensemble de données support est une séquence d'images successives, et **en ce que**, au cours de l'étape de lecture, chaque valeur, codée ou non codée, est obtenue par combinaison d'informations lues dans au moins deux images.

7. Procédé selon l'une quelconque des revendications 1 à 6, **caractérisé en ce que** l'étape de lecture comprend les étapes suivantes :

- réception brute (61 ; 71) d'au moins une valeur reçue ;
- décodage (63 ; 72) de ladite au moins une valeur reçue, permettant d'obtenir une valeur lue du signal déphasé égale à une des valeurs du signal de référence.

8. Dispositif de détermination d'au moins une horodate à partir d'un ensemble de données support après transmission dudit ensemble de données support, **caractérisé en ce qu'**il comprend :

- des moyens de lecture, permettant de lire, dans l'ensemble de données support, au moins une valeur d'un signal d'horodatage décalé temporellement, dit signal d'horodatage déphasé, lors de ladite transmission, de même forme qu'un signal d'horodatage de référence mais présentant par rapport à celui-ci un décalage temporel, appelé déphasage $\phi$ inconnu dans un repère temporel donné, le tatouage préalable de chaque horodate consistant en un tatouage de la valeur à un instant de tatouage donné du signal d'horodatage de référence, qui est un signal déterministe variant au cours du temps dans le repère temporel donné et s'écrivant s(t), avec s(t) différent de t, où t est incrémenté selon un pas d'incrémentation égal à une unité de temps prédéterminée ;
- des moyens d'estimation du déphasage $\phi$ à partir de ladite au moins une valeur du signal d'horodatage déphasé et de la connaissance du signal d'horodatage de référence ;
- des moyens de détermination, pour ladite au moins une valeur lue, lue à un instant donné $t_r$, d'une horodate h associée en fonction dudit instant de lecture $t_r$ et du déphasage estimé $\phi$ ;

chacune des valeurs du signal d'horodatage de référence comprenant N parties (51, 52), avec $N \geq 2$, une partie de rang 1, dite partie rapide (51), étant incrémentée toutes les horodates et prenant des valeurs cycliques selon une période $p_1$, une partie de rang i, avec $i \in \{2...N\}$, étant incrémentée quand la partie de rang i-1 a effectué une période $p_{i-1}$ complète, et prenant des valeurs cycliques selon une période $p_i$.

**Claims**

1. Method for determining at least one timestamp from a set of support data after transmission of said set of support data, **characterized in that** it comprises the following steps:

- reading (41), in the set of support data, of at least one value of a temporally shifted timestamp signal, called phase-shifted timestamp signal, during said transmission, of the same form as a reference timestamp signal but having in relation to this signal a temporal shift, called phase shift, $\phi$ unknown in a given temporal reference, the previous watermarking of each timestamp consisting in a watermarking of the value at a given watermarking time of the reference timestamp signal, that is a determinist signal varying over time in a given temporal reference and being written as s(t), with s(t) different from t, wherein t is incremented according to an incrementing step equal to one predetermined time unit,
- estimation (42) of the phase shift $\phi$ from said at least one read value of the phase-shifted timestamp signal and from the knowledge of the reference timestamp signal,
- for said at least one read value, read at a given time $t_r$, determination (43) of a timestamp h associated according to said read time $t_r$ and the estimated phase shift $\phi$,

each of the values of the reference timestamp signal comprising N parts (51, 52), where $N \geq 2$, a part of row 1, called rapid part (51), being incremented every timestamp and taking cyclic values according to a period $p_1$, a part of row i, where $i \in \{2...N\}$, being incremented when the part of row i-1 has carried out a full period $p_{i-1}$, and taking cyclic values according to a period $p_i$.

2. Method according to claim 1, **characterized in that** the determination of the associated timestamp h consists in adding said read time $t_r$ and the estimated phase shift $\phi$ : h = $t_r$ + $\phi$

3. Method according to any one of claims 1 and 2, **characterized in that** the determination of the associated timestamp h takes into account a change of sampling frequency between the reference timestamp signal and the phase-shifted timestamp signal, in such a manner that said associated timestamp h is such that: $h = \omega.t_r + \phi$, where w is equal to the ratio between the sampling frequency of the reference timestamp signal and the sampling frequency of the phase-shifted timestamp signal

4. Method according to any one of claims 1 to 3, **characterized in that** the phase-shifted timestamp signal has distinct values when t varies from $t_d$, to $t_f$, where $t_d$ and $t_f$ are the start and end times of the timestamp decoding.

5. Method according to any one of claims 1 to 3, **characterized in that** the set of support data is a sequence of successive pictures, and **in that**, during the reading step, each value, coded or not coded, is read in a separate picture.

6. Method according to any one of claims 1 to 3, **characterized in that** the set of support data is a sequence of successive pictures, and **in that** during the reading step, each value, coded or not coded, is obtained by combining information read in at least two pictures.

7. Method according to any one of claims 1 to 6, **characterized in that** the reading step comprises the following steps:

   - reception of raw data (61; 71) of at least one received value,
   - decoding (63; 72) of said at least one received value, enabling a read value of the phase-shifted signal equal to one of the values of the reference signal to be obtained.

8. Device for determining at least one timestamp from a set of support data after transmission of said support data, **characterized in that** it comprises:

   - reading means used to read, in the set of support data, at least one value of a temporally shifted timestamp signal, called phase-shifted timestamp signal, during said transmission, of the same form as a reference timestamp signal but having in relation to this signal a temporal shift, called phase shift, $\phi$ unknown in a given temporal reference, the previous watermarking of each timestamp consisting in a watermarking of the value at a given watermarking time of the reference timestamp signal, that is a determinist signal varying over time in a given temporal reference and being written as s(t), with s(t) different from t, wherein t is incremented according to an incrementing step equal to one predetermined time unit,
   - estimation means of the phase shift $\phi$ from said at least one value of the phase-shifted timestamp signal and from the knowledge of the reference timestamp signal,
   - determination means, for said at least one read value, read at a given time $t_r$, of a timestamp h associated according to said read time $t_r$ and the estimated phase shift $\phi$. each of the values of the reference timestamp signal comprising N parts (51, 52), where $N \geq 2$, a part of row 1, called rapid part (51), being incremented every timestamp and taking cyclic values according to a period $p_1$, a part of row i, where $i \in \{2...N\}$, being incremented when the part of row i-1 has carried out a full period $p_{i-1}$, and taking cyclic values according to a period $p_i$.

**Patentansprüche**

1. Verfahren zur Bestimmung mindestens eines Zeitstempels aus einer Menge von Supportdaten nach Übertragung der besagten Menge von Supportdaten, **dadurch gekennzeichnet, dass** das Verfahren die folgenden Schritte umfasst:

   - Lesen (41) - in der Menge von Supportdaten - mindestens eines Werts eines zeitverschobenen Zeitstempelsignals, des so genannten phasenverschobenen Zeitstempelsignals, während der besagten Übertragung mit derselben Form wie ein Bezugszeitstempelsignal, das jedoch im Vergleich zu diesem eine unbekannte Zeitverschiebung, die als Phasenverschiebung bezeichnet wird, $\Phi$ in einer gegebenen Zeitmarkierung aufweist, wobei das vorherige Wasserzeichen jedes Zeitstempels aus einem Wasserzeichen des Werts zu einem gegebenen Wasserzeichenzeitpunkt des Bezugszeitstempelsignals besteht, bei dem es sich um ein deterministisches Signal handelt, das sich im Laufe der Zeit in der gegebenen Zeitmarkierung ändert und als (s)t geschrieben wird, wobei (s)t sich von t unterscheidet, wobei t gemäß einem Inkrementierungsschritt entsprechend einer vorherbestimmten Zeiteinheit inkrementiert wird;

- Schätzung (42) der Phasenverschiebung Φ aus dem besagten mindestens einen gelesenen Wert des phasenverschobenen Zeitstempelsignals und der Kenntnis des Bezugszeitstempelsignals;
- für den besagten mindestens einen gelesenen Wert, der zu einem gegebenen Zeitpunkt $t_r$ gelesen wurde, Bestimmung (43) eines assoziierten Zeitstempels h in Abhängigkeit von dem besagten Lesezeitpunkt $t_r$ und der geschätzten Phasenverschiebung Φ;

wobei jeder der Werte des Bezugszeitstempelsignals N Teile (51, 52) umfasst, wobei N $\geq$ 2 ist, einen Teil der Reihe 1, den so genannten schnellen Teil (51), der mit jedem der Zeitstempel inkrementiert wird und gemäß einer Periode $p_1$ zyklische Werte annimmt, einen Teil der Reihe i, wobei i $\in\{2...N\}$ ist, der inkrementiert wird, wenn der Teil der Reihe i-1 eine komplette Periode $p_{i-1}$ durchgeführt hat, und gemäß einer Periode $p_i$ zyklische Werte annimmt.

2. Verfahren nach Anspruch 1, **dadurch gekennzeichnet, dass** die Bestimmung des assoziierten Zeitstempels h in dem Addieren des besagten Lesezeitpunkts $t_r$ und der geschätzten Phasenverschiebung Φ besteht: h = $t_r$ + Φ.

3. Verfahren nach einem der Ansprüche 1 und 2, **dadurch gekennzeichnet, dass** die Bestimmung des assoziierten Zeitstempels h außerdem eine Veränderung der Abtastfrequenz zwischen dem Bezugszeitstempelsignal und dem phasenverschobenen Zeitstempelsignal berücksichtigt, so dass der besagte assoziierte Zeitstempel h wie folgt ist: h = ω.$t_r$ + Φ, wobei ω dem Verhältnis zwischen der Abtastfrequenz des Bezugszeitstempelsignals und der Abtastfrequenz des phasenverschobenen Zeitstempelsignals entspricht.

4. Verfahren nach einem der Ansprüche 1 bis 3, **dadurch gekennzeichnet, dass** das phasenverschobene Zeitstempelsignal verschiedene Werte annimmt, wenn t sich von $t_d$' zu $t_f$' ändert, wobei $t_d$' und $t_f$' der Startzeitpunkt und der Endzeitpunkt der Dekodierung von Zeitstempeln sind.

5. Verfahren nach einem der Ansprüche 1 bis 3, **dadurch gekennzeichnet, dass** die Menge von Supportdaten eine Sequenz von aufeinander folgenden Bildern ist und dass im Laufe des Leseschritts jeder Wert, kodiert oder unkodiert, in einem jeweils anderen Bild gelesen wird.

6. Verfahren nach einem der Ansprüche 1 bis 3, **dadurch gekennzeichnet, dass** die Menge von Supportdaten eine Sequenz von aufeinander folgenden Bildern ist und dass im Laufe des Leseschritts jeder Wert, kodiert oder unkodiert, durch Kombination von in mindestens zwei Bildern gelesenen Informationen erhalten wird.

7. Verfahren nach einem der Ansprüche 1 bis 6, **dadurch gekennzeichnet, dass** der Leseschritt die folgenden Schritte umfasst:

- Empfang von Rohdaten (61; 71) mindestens eines empfangenen Werts;
- Dekodierung (63; 72) des besagten mindestens einen empfangenen Werts, was ermöglicht, einen gelesenen Wert des phasenverschobenen Signals zu erhalten, der einem der Werte des Bezugssignals entspricht.

8. Vorrichtung zur Bestimmung mindestens eines Zeitstempels aus einer Menge von Supportdaten nach Übertragung der besagten Menge von Supportdaten, **dadurch gekennzeichnet, dass** die Vorrichtung Folgendes umfasst:

- Lesemittel, die das Lesen - in der Menge von Supportdaten - mindestens eines Werts eines zeitverschobenen Zeitstempelsignals, des so genannten phasenverschobenen Zeitstempelsignals, während der besagten Übertragung mit derselben Form wie ein Bezugszeitstempelsignal, das jedoch im Vergleich zu diesem eine unbekannte Zeitverschiebung, die als Phasenverschiebung bezeichnet wird, Φ in einer gegebenen Zeitmarkierung aufweist, ermöglichen, wobei das vorherige Wasserzeichen jedes Zeitstempels aus einem Wasserzeichen des Werts zu einem gegebenen Wasserzeichenzeitpunkt des Bezugszeitstempelsignals besteht, bei dem es sich um ein deterministisches Signal handelt, das sich im Laufe der Zeit in der gegebenen Zeitmarkierung ändert und als (s)t geschrieben wird, wobei (s)t sich von t unterscheidet, wobei t gemäß einem Inkrementierungsschritt entsprechend einer vorherbestimmten Zeiteinheit inkrementiert wird;
- Mittel zur Schätzung der Phasenverschiebung Φ aus dem besagten mindestens einen Wert des phasenverschobenen Zeitstempelsignals und der Kenntnis des Bezugszeitstempelsignals;
- Mittel zur Bestimmung - für den besagten mindestens einen gelesenen Wert, der zu einem gegebenen Zeitpunkt $t_r$ gelesen wurde - eines assoziierten Zeitstempels h in Abhängigkeit von dem besagten Lesezeitpunkt $t_r$ und der geschätzten Phasenverschiebung Φ; wobei jeder der Werte des Bezugszeitstempelsignals N Teile (51, 52) umfasst, wobei N $\geq$ 2 ist, einen Teil der Reihe 1, den so genannten schnellen Teil (51), der mit allen Zeitstempeln inkrementiert wird und gemäß einer Periode $p_1$ zyklische Werte annimmt, einen Teil der Reihe i, wobei i $\in\{2...N\}$

ist, der inkrementiert wird, wenn der Teil der Reihe i-1 eine komplette Periode $p_{i-1}$ durchgeführt hat, und gemäß einer Periode $p_i$ zyklische Werte annimmt.

11 —
Association à l'horodate de la valeur
à un instant donné d'un signal
d'horodatage de référence s(t)

12 —
Tatouage de cette valeur

## Fig. 1

| $I_0$ | $I_1$ | $I_2$ | $I_3$ | $I_4$ | $I_5$ | $I_6$ | $I_7$ | . . . . |
|---|---|---|---|---|---|---|---|---|

$\underbrace{\phantom{I_0 \quad I_1 \quad I_2 \quad I_3}}_{m_0}$ $\underbrace{\phantom{I_4 \quad I_5 \quad I_6 \quad I_7}}_{m_1}$

## Fig. 3

41 —
Lecture d'au moins une valeur d'un
signal d'horodatage déphasé s'(t)

42 —
Estimation du déphasage $\phi$

43 —
Détermination d'une
horodate : h = tr + $\phi$

## Fig. 4

50 —

| MTR | MTL |
|---|---|

51 —        — 52

## Fig. 5

| $I_0$ | $I_1$ | $I_2$ | $\cdots$ | $I_P$ | $I_{P+1}$ | $\cdots$ | $I_{M-1}$ | $I_M$ |

Séquence vidéo émise

$t_0 \quad t_1 \quad t_2 \qquad\qquad\qquad\qquad\qquad t_{M-1} \quad t_M \qquad t$

21

Séquence vidéo reçue

| $I'_0$ | $I'_1$ | $I'_2$ | $\cdots$ | $I'_P$ | $I_{a1}$ | $\cdots$ | $I_{az}$ | $I''_0$ | $\cdots$ | $I''_{Q-1}$ | $I''_Q$ |

Segment 1 (tatoué)   Segment 2 (non tatoué)   Segment 3 (tatoué)

24     25

$t'_0 \quad t'_1 \quad t'_2 \qquad\qquad t'_P \quad 26 \qquad\qquad t''_0 \quad t''_1 \quad t''_{Q-1} \quad t''_Q \qquad t$

23

$s(t)$

| $t_0$ | $t_1$ | $t_2$ | $\cdots$ | $t_P$ | $t_{P+1}$ | $\cdots$ | $t_M$ |
|---|---|---|---|---|---|---|---|
| $I_0$ | $I_1$ | $I_2$ | $\cdots$ | $I_P$ | $I_{P+1}$ | $\cdots$ | $I_M$ |
| $m_0$ | $m_1$ | $m_2$ | $\cdots$ | $m_P$ | $m_{P+1}$ | $\cdots$ | $m_M$ |

22

$s'(t) =$
$s(t+\emptyset'_0)$
$\emptyset'_0 = t_0 - t'_0$

| $t'_0$ | $t'_1$ | $t'_2$ | $\cdots$ | $t'_P$ |
|---|---|---|---|---|
| $I'_0$ | $I'_1$ | $I'_2$ | $\cdots$ | $I'_P$ |
| $m_0$ | $m_1$ | $m_2$ | $\cdots$ | $m_P$ |

27

$s''(t) = s(t+\emptyset''_0)$
$\emptyset''_0 = t_{P+1} - t''_0$

| $t''_0$ | $t''_1$ | $\cdots$ | $t''_Q$ |
|---|---|---|---|
| $I''_0$ | $I''_1$ | $\cdots$ | $I''_Q$ |
| $m_{P+1}$ | $m_{P+2}$ | $\cdots$ | $m_M$ |

28

## Fig. 2

Réception brute —— 61

Traitement global —— 62

—— 41

Décodage —— 63

<u>Fig. 6</u>

Réception brute —— 71

—— 41

Décodage global —— 72

<u>Fig. 7</u>

Phase d'amorçage —— 81

Phase de poursuite —— 82

<u>Fig. 8</u>

Sortie s

910   99   98   97   96   95   94   93   92   91

Fig. 9

0
7       1
6           2
5       3
4

Fig. 10

$|1-6|_{mod(8)} = -5_{mod(8)}$
$= 3$

$|6-1|_{mod(8)} = 5$

0
7       1
6           2
5       3
4

Fig. 11

**EP 1 908 008 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KASHYAP et al.** *Codes for data synchronization with timing,* 29 Mars 1999
- **JOHN PROAKIS.** Digital Communications. McGraw-Hill, 433-435